(19) Europäisches Patentamt

European Patent Office

Office européen des brevets

(11) **EP 4 711 195 A1**

(12) **EUROPEAN PATENT APPLICATION**

(43) Date of publication:
**18.03.2026 Bulletin 2026/12**

(21) Application number: **25190848.9**

(22) Date of filing: **22.07.2025**

(51) International Patent Classification (IPC):
**B60L 53/53** (2019.01)        **B60L 53/63** (2019.01)

(52) Cooperative Patent Classification (CPC):
**B60L 53/53; B60L 53/63;** B60L 2250/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.09.2024 JP 2024159601**

(71) Applicant: **Hitachi, Ltd.**
**Tokyo 100-8280 (JP)**

(72) Inventors:
• **DONG, Hang**
  **Tokyo, 100-8280 (JP)**
• **SETO, Akane**
  **Tokyo, 100-8280 (JP)**
• **UYAMA, Kazuya**
  **Tokyo, 100-8280 (JP)**

(74) Representative: **MERH-IP Matias Erny Reichl Hoffmann**
  **Patentanwälte PartG mbB**
  **Paul-Heyse-Straße 29**
  **80336 München (DE)**

(54) **CHARGE/DISCHARGE PLANNING APPARATUS AND CHARGE/DISCHARGE PLANNING METHOD**

(57)     Battery depletion can be avoided and the supply of grid power is stabilized while enhancing a renewable energy utilization rate. A charge/discharge planning apparatus: creates a renewable energy power generation amount fluctuation scenario with a changed power generation amount of renewable energy, and a grid power fluctuation scenario with a changed demand for grid power on the basis of at least one of weather forecast information and grid power demand prediction information; executes a simulation regarding each of the plurality of proposed charge/discharge plans under at least one of the renewable energy power generation amount fluctuation scenario and the grid power fluctuation scenario and calculates a charge/discharge plan evaluation value based on an execution result of the simulation regarding the plurality of proposed charge/discharge plans; and adopts any one charge/discharge plan from among the plurality of proposed charge/discharge plans on the basis of the calculated charge/discharge plan evaluation value so that a preset constraint condition will be satisfied.

FIG. 1

EP 4 711 195 A1

**Description**

TECHNICAL FIELD

The present invention relates to a charge/discharge planning apparatus and a charge/discharge planning method and is suited for application to, for example, a charge/discharge planning apparatus regarding a technology to create charge/discharge plans.

BACKGROUND ART

Technologies described in PTL 1 and PTL 2 exist as the technology to create the charge/discharge plans. The technologies described in PTL 1 and PTL 2 assume various situations and create the charge/discharge plans which cope with the respective situations. Particularly, the technology described in PTL 2 decides the configuration of a running power generation facility/facilities so that sales and profits will be maximized upon power generation operation by using a plurality of power generation facilities.

CITATION LIST

PATENT LITERATURE

   PTL 1: Japanese Patent Application Laid-Open (Kokai) Publication No. 2024-52031
   PTL 2: Japanese Patent Application Laid-Open (Kokai) Publication No. 2023-100472

SUMMARY OF THE INVENTION

PROBLEMS TO BE SOLVED BY THE INVENTION

Generally, it is known that the demand for electric power fluctuates and the supply of grid power which uses renewable energy as an electric power source fluctuates and is thereby unstable. Therefore, if the actual electric power demand is larger than the electric power demand predicted in advance, there is fear that the supply of the grid power may be strained and battery depletion may occur.
The present invention was devised in consideration of the above-described circumstances and aims at proposing a charge/discharge planning system and a charge/discharge planning method which are capable of avoiding the battery depletion, enhancing a utilization rate of the renewable energy, and stabilizing the supply of the grid power.

MEANS TO SOLVE THE PROBLEMS

In order to solve the above-described problems, there is provided according to the present invention a charge/discharge planning apparatus for creating a charge/discharge plan for at least one electric vehicle by grid power by at least one of a plurality of electric power sources including electric power generated using renewable energy and electric power of a storage battery, wherein the charge/discharge planning apparatus includes: a storage unit that retains electric vehicle operation information indicating an operation plan of the electric vehicle, vehicle information indicating a status of the electric vehicle, charger information indicating information about a charger, storage battery information indicating information about the storage battery, and at least one of grid power demand prediction information indicating a demand prediction of the grid power and weather forecast information indicating a forecast of weather information; and a control unit that creates the charge/discharge plan, wherein the control unit: creates a plurality of proposed charge/discharge plans based on the electric vehicle operation information, the vehicle information, the charger information, the storage battery information, and at least one of the grid power demand prediction information and the weather forecast information; creates at least one of a renewable energy power generation amount fluctuation scenario with a changed power generation amount of the renewable energy, and a grid power fluctuation scenario with a changed demand for the grid power on the basis of at least one of the weather forecast information and the grid power demand prediction information; executes a simulation regarding each of the plurality of proposed charge/discharge plans under at least one of the renewable energy power generation amount fluctuation scenario and the grid power fluctuation scenario and calculates a charge/discharge plan evaluation value based on an execution result of the simulation regarding the plurality of proposed charge/discharge plans; and adopts any one charge/discharge plan from among the plurality of proposed charge/discharge plans on the basis of the calculated charge/discharge plan evaluation value so that a preset constraint condition will be satisfied.

Moreover, there is provided according to the present invention a charge/discharge planning method of a charge/discharge planning apparatus for creating a charge/discharge plan for at least one electric vehicle by grid power by at least one of a plurality of electric power sources including electric power generated using renewable energy and electric power of a storage battery, the charge/discharge planning method comprising: a retaining step of causing a storage unit to retain electric vehicle operation information indicating an operation plan of the electric vehicle, vehicle information indicating a status of the electric vehicle, charger information indicating information about a charger, storage battery information indicating information about the storage battery, and at least one of grid power demand prediction information indicating a demand prediction of the grid power and weather forecast information indicating a forecast of weather information; a charge/discharge plan creation step executed by a control unit creating a plurality of proposed charge/discharge plans based on the electric vehicle operation information, the vehicle information, the charger information, the storage battery information, and at least one of the grid power demand prediction information and the weather forecast information; a scenario creation step executed by the control unit creating at least one of a renewable energy power generation amount fluctuation scenario with a changed power generation amount of the renewable energy, and a grid power fluctuation scenario with a changed demand for the grid power on the basis of at least one of the weather forecast information and the grid power demand prediction information; an evaluation value calculation step executed by the control unit executing a simulation regarding each of the plurality of proposed charge/discharge plans under at least one of the renewable energy power generation amount fluctuation scenario and the grid power fluctuation scenario and calculating a charge/discharge plan evaluation value based on an execution result of the simulation regarding the plurality of proposed charge/discharge plans; and a charge/discharge plan adoption step executed by the control unit adopting any one charge/discharge plan from among the plurality of proposed charge/discharge plans on the basis of the calculated charge/discharge plan evaluation value so that a preset constraint condition will be satisfied.

ADVANTAGEOUS EFFECTS OF THE INVENTION

According to the present invention, it is possible to avoid the battery depletion, enhance the utilization rate of the renewable energy, and stabilize the supply of the grid power.

BRIEF DESCRIPTION OF DRAWINGS

Fig. 1 is a system configuration diagram illustrating a hardware configuration example of a charge/discharge planning system equipped with a charge/discharge planning apparatus according to a first embodiment;
Fig. 2 is a system configuration diagram illustrating a software configuration example of this charge/discharge planning system including the charge/discharge planning apparatus according to the first embodiment;
Fig. 3 is a diagram illustrating an example of a vehicle information table;
Fig. 4 is a diagram illustrating an example of an operation information table;
Fig. 5 is a diagram illustrating an example of a base information table;
Fig. 6 is a diagram illustrating an example of a charger information table;
Fig. 7 is a diagram illustrating an example of a storage battery information table;
Fig. 8 is a diagram illustrating an example of a grid power demand prediction information table;
Fig. 9 is a diagram illustrating an example of a weather forecast information table;
Fig. 10 is a diagram illustrating an example of an evaluation information table;
Fig. 11 is a diagram illustrating an example of a parameter information table;
Fig. 12A is a diagram illustrating an example of a proposed charge/discharge plan information table;
Fig. 12B is a diagram illustrating an example of an electric vehicle charge/discharge plan;
Fig. 12C is a diagram illustrating an example of a storage battery electricity storage/discharge plan;
Fig. 13 is a diagram illustrating an example of a renewable energy power generation amount fluctuation scenario information table;
Fig. 14 is a diagram illustrating an example of a grid power demand fluctuation scenario information table;
Fig. 15 is a flowchart illustrating an example of a process sequence of vehicle charge/discharge plan and storage battery charge/discharge plan creation processing according to the first embodiment;
Fig. 16 is a flowchart illustrating an example of a process sequence of proposed charge/discharge plan creation processing;
Fig. 17 is a flowchart illustrating an example of a process sequence of renewable energy power generation amount fluctuation scenario creation processing;
Fig. 18 is a flowchart illustrating an example of a process sequence of grid power demand fluctuation scenario creation processing;

Fig. 19 is a diagram illustrating an example of a display screen of a result outline of an electric vehicle charge/discharge plan;

Fig. 20 is a diagram illustrating an example of a display screen of an in-vehicle terminal;

Fig. 21 is a diagram illustrating an example of a display screen of a base plan management terminal;

Fig. 22 is a diagram illustrating an example of a display screen of the base plan management terminal;

Fig. 23 is a system diagram illustrating an example of the configuration of a charge/discharge planning system equipped with a charge/discharge planning apparatus according to a second embodiment;

Fig. 24 is a diagram illustrating an example of a vehicle information table according to the second embodiment;

Fig. 25 is a diagram illustrating an example of an operation information table according to the second embodiment;

Fig. 26 is a diagram illustrating an example of a replaceable battery information table according to the second embodiment;

Fig. 27 is a diagram illustrating an example of a display screen of a base plan management terminal according to the second embodiment.

## DESCRIPTION OF EMBODIMENTS

An embodiment of the present invention will be described below in detail with reference to the drawings.

Incidentally, the embodiment described below is an example for explaining the present invention and some omissions and simplification are made as appropriate for clarity of explanation. The present invention can be implemented in various other forms. Unless otherwise limited, each constituent element may be singular or plural.

The location, size, shape, range, and so on of each constituent element indicated in the drawings may not represent the actual location, size, shape, range, etc. in order to facilitate understanding of the invention. Therefore, the present invention is not necessarily limited to the locations, sizes, shapes, ranges, etc. disclosed in the drawings.

Examples of various types of information may be described in expressions such as "table," "list," and "queue," but the various types of information may be expressed in other data structures. For example, various types of information such as an "XX table," an "XX list," and an "XX queue" may be expressed as "XX information." When explaining identification information, expressions such as "identification information," "identifier," "name," "ID," and "number" are used, but they can be replaced with each other. If there are a plurality of constituent elements having the same or similar function, the same reference numeral with different subscripts may be used. Moreover, if it is unnecessary to distinguish between these multiple constituent elements, they may be described by omitting the subscripts.

In the embodiment, processing performed by executing a program may be described. Under this circumstance, a computer causes a processor (such as a CPU or a GPU) to execute a program(s) and performs processing defined by the program(s) while using storage resources (such as a memory), interface devices (such as communication ports), and so on. Therefore, a subject of the processing performed by executing the program may be the processor. Similarly, the subject of the processing performed by executing the program may be a controller, an apparatus, a system, a computer, or a sheet which has the processor. The subject of the processing performed by executing the program may be an arithmetic unit and may include a dedicated circuit for performing specific processing. Under this circumstance, the dedicated circuit is, for example, an FPGA (Field Programmable Gate Array), an ASIC (Application Specific Integrated Circuit), or a CPLD (Complex Programmable Logic Device).

The program may be installed to the computer from a program source. The program source may be, for example, a program distribution server or a computer-readable storage medium. If the program source is the program distribution server, the program distribution server may include a processor and a storage resource for storing the program to be distributed, and the processor of the program distribution server may distribute the target program to be distributed to other computers. Moreover, in the embodiment, two or more programs may be implemented as one program or one program may be implemented as two or more programs.

### (1) First Embodiment

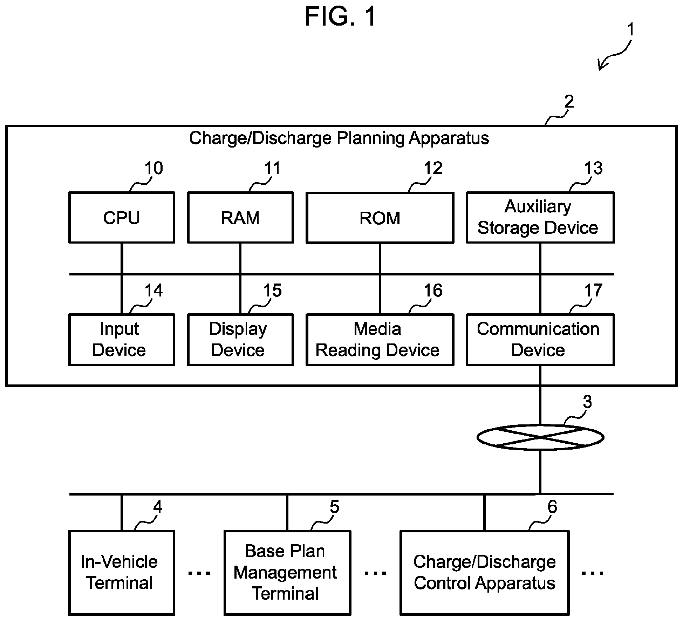

Fig. 1 is a system configuration diagram illustrating a hardware configuration example of a charge/discharge planning system 1 equipped with a charge/discharge planning apparatus 2 according to a first embodiment.

This charge/discharge planning system 1 includes the charge/discharge planning apparatus 2, one or a plurality of in-vehicle terminals 4, one or a plurality of base plan management terminals 5, one or a plurality of charge/discharge control apparatuses 6, and a network 3. The charge/discharge planning apparatus 2, the in-vehicle terminal(s) 4, the base plan management terminal(s) 5, and the charge/discharge control apparatus(es) 6 are connected to each other via the network 3 and can mutually perform data communication.

Incidentally, the network 3 which connects between the charge/discharge planning apparatus 2 and each in-vehicle terminal 4 and also connects between the charge/discharge planning apparatus 2 and each base plan management terminal 5, and the network 3 which connects between the charge/discharge planning apparatus 2 and each charge/discharge control apparatus 6 do not necessarily have to be the same network 3. In this embodiment, for example, a wireless communication network such as a cellular network or wide-area wireless network is assumed as the network 3 which connects between the charge/discharge planning apparatus 2 and each in-vehicle terminal 4 and also connects between the charge/discharge planning apparatus 2 and each base plan management terminal; and a wired communication network such as the Internet is assumed as the network 3 which connects between the charge/discharge planning apparatus 2 and each charge/discharge control apparatus 6.

The charge/discharge planning apparatus 2 is, for example, a general-purpose computer and includes a CPU (Central Processing Unit) 10, a RAM (Random Access Memory) 11, a ROM (Read Only Memory)12, an auxiliary storage device 13, an input device 14, a display device 15, a media reading device 16, and a communication device 17.

The CPU 10 is a processor which controls the operation of the entire charge/discharge planning apparatus 2. The RAM 11 is a volatile semiconductor memory. The RAM 11 is used as a working memory of the CPU 10 to temporarily store various kinds of programs and various kinds of data.

The ROM 12 is a nonvolatile semiconductor memory. The ROM 12 is used to store, for example, programs which are necessary to activate the charge/discharge planning apparatus 2.

The auxiliary storage device 13 is a large-capacity, nonvolatile storage device such as a hard disk drive or an SSD (Solid State Drive). The auxiliary storage device 13 stores, for example, various kinds of programs other than the programs stored in the ROM 12, and data which need to be saved for a long period of time.

In this embodiment, the programs stored in the auxiliary storage device 13 are read by the CPU 10 to the RAM 11 upon the activation of the charge/discharge planning apparatus 2 or whenever necessary. As the programs which are read to this RAM 11 are executed by the CPU 10, various kinds of processing of the charge/discharge planning apparatus 2 as a whole as described later will be executed.

The input device 14 is a device used by a user when inputting information to the charge/discharge planning apparatus 2. The input device 14 includes a keyboard, a mouse, etc. The display device 15 is a display device such as a liquid crystal display or an organic EL (Electro-Luminescence) display. The display device 15 is used to display various kinds of information. Incidentally, instead of the input device 14 and the display device 15, a touch panel in which these functions are integrated may be adopted.

The media reading device 16 is a device for reading information which is stored in, for example, a portable storage medium such as a USB (Universal Serial Bus) memory. The communication device 17 is a device equipped with a communication function to send and receive information via the network 3 between each in-vehicle terminal 4, each base plan management terminal 5, and each charge/discharge control apparatus 6. The communication device 17 is configured from, for example, a wired and/or wireless NIC (Network Interface Card).

The in-vehicle terminal 4 is a dedicated wireless communication terminal device which is mounted in each vehicle. In this embodiment, electric vehicles and vehicles driven by other than electricity are indicated as examples of the vehicles. So-called hybrid vehicles can be mentioned, in addition to gasoline powered vehicles, as examples of the vehicles driven by other than electricity. Incidentally, in this embodiment, when it is particularly unnecessary to distinguish the electric vehicles from other vehicles, the electric vehicles may be sometimes collectively referred to as the vehicles. The in-vehicle terminal 4 includes, for example, a display device such as a small-sized liquid crystal display or organic EL display.

The base plan management terminal 5 is a general-purpose computer which is installed at each base in order to charge (or discharge) the vehicles. The charge/discharge control apparatus 6 is a power converter device which is installed at each base.

The charge/discharge control apparatus 6 controls, for example, charging from grid power to an electric vehicle, charging from the grid power to a storage battery, charging from a power generation facility of renewable energy such as solar power generation to the electric vehicle, charging from the renewable energy power generation facility to the storage battery, discharging from the storage battery to the electric vehicle, and discharging from the storage battery to a building(s).

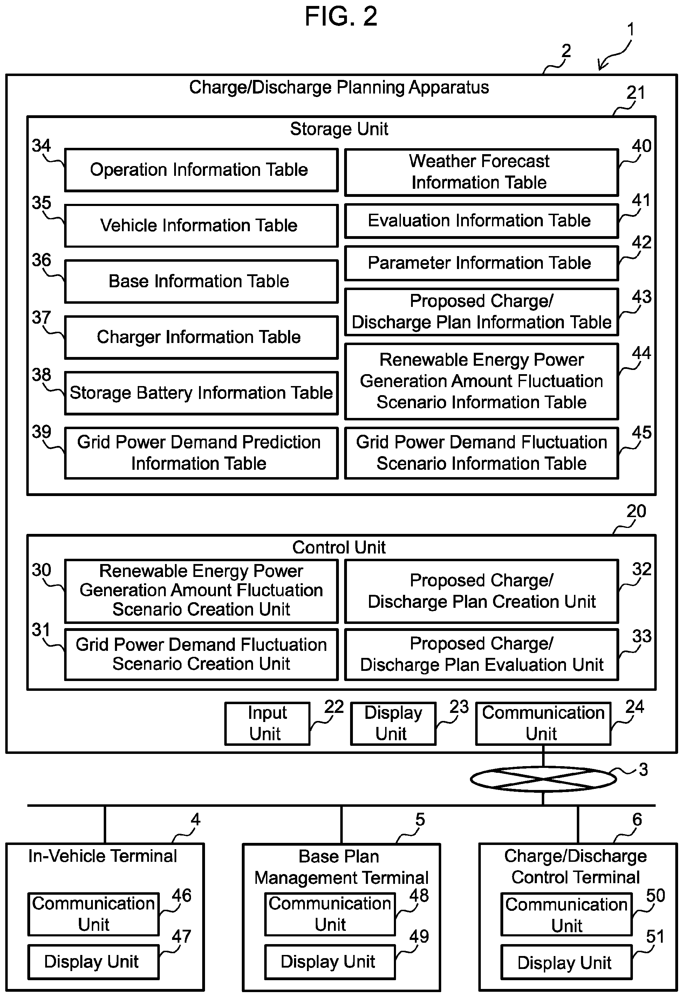

Fig. 2 is a system configuration diagram illustrating a software configuration example of this charge/discharge planning system 1 including the charge/discharge planning apparatus 2 according to the first embodiment. The charge/discharge planning apparatus 2 includes a control unit 20, a storage unit 21, an input unit 22, a display unit 23, and a communication unit 24. The charge/discharge planning apparatus 2 creates a charge/discharge plan for at least one electric vehicle by grid power by at least one of a plurality of electric power sources including electric power generated by using renewable energy and electric power of a storage battery.

The storage unit 21 includes the RAM 11, the ROM 12 and the auxiliary storage device 13 described earlier. The storage unit 21 retains an operation information table 34, a vehicle information table 35, a charger information table 37, a storage battery information table 38, and at least one of a grid power demand prediction information table 39 and a weather forecast information table 40.

Furthermore, the storage unit 21 retains an evaluation information table 41, a parameter information table 42, and a proposed charge/discharge plan information table 43. The storage unit 21 may also retain a base information table 36. The storage unit 21 retains a renewable energy power generation amount fluctuation scenario information table 44 and a grid power demand fluctuation scenario information table 45.

The operation information table 34 stores electric vehicle operation information indicating an operation plan of vehicles such as electric vehicles. The vehicle information table 35 stores, for example, information about vehicles including electric vehicles which can be used when executing a created charge/discharge plan as the vehicle information indicating the status of the electric vehicles. The base information table 36 stores information about a base where the vehicle performs charging. The charger information table 37 stores information about chargers installed at the base. The storage battery information table 38 stores information about storage batteries. The grid power demand prediction information table 39 stores prediction information such as grid power demand prediction information indicating a demand prediction about the grid power (for example, an electric power demand amount of the next day). The weather forecast information table 40 stores weather forecast information indicating a forecast of weather information, for example, at a renewable energy power plant such as solar power generation and at the location of a base (such as a weather status of the next day). The weather forecast information is used for, for example, the prediction of the power generation amount of the renewable energy power plant by referring to sunshine hours included in the weather forecast information.

The evaluation information table 41 stores information about partial items regarding the objective function for evaluating the created proposed charge/discharge plan. The parameter information table 42 stores set parameter information of a constraint condition(s) used when creating the charge/discharge plan(s).

The control unit 20 executes various kinds of processing by the CPU 10 executing dedicated programs stored in the aforementioned auxiliary storage device 13. The control unit 20 creates the charge/discharge plan as a candidate solution. The control unit 20 has a renewable energy power generation amount fluctuation scenario creation unit 30, a grid power demand fluctuation scenario creation unit 31, a proposed charge/discharge plan creation unit 32, and a proposed charge/discharge plan evaluation unit 33.

The control unit 20 creates a plurality of proposed charge/discharge plans based on the operation information table 34 for managing the electric vehicle operation information, the vehicle information table 35 for managing the vehicle information, the charger information table 37 for managing the charger information, the storage battery information table 38 for managing the storage battery information, and at least one of the grid power demand prediction information table 39 for managing the grid power demand prediction information and the weather forecast information table 40 for managing the weather forecast information.

The control unit 20 generates at least one of a renewable energy power generation amount fluctuation scenario with a changed power generation amount of the renewable energy and a grid power fluctuation scenario with a changed demand for the grid power on the basis of at least one of the weather forecast information table 40 and the grid power demand prediction information table 39.

The control unit 20 executes a simulation under at least one of the renewable energy power generation amount fluctuation scenario and the grid power fluctuation scenario regarding each of the plurality of proposed charge/discharge plans and calculates a charge/discharge plan evaluation value as an example of the evaluation value regarding the plurality of proposed charge/discharge plans on the basis of an execution result of the simulation. The control unit 20 adopts any one charge/discharge plan from among the plurality of proposed charge/discharge plans on the basis of the calculated charge/discharge plan evaluation value so that a preset constraint condition(s) will be satisfied. The constraint condition(s) will be described later. Incidentally, in this embodiment, the charge/discharge plan evaluation value may be sometimes abbreviated as the "evaluation value."

The proposed charge/discharge plan information table 43 stores information about the proposed charge/-discharge plans created by the control unit 20. The proposed charge/discharge plan information table 43 stores a plurality of charge/discharge plans which are created as candidate solutions, for example, the plurality of charge/discharge plans including at least one of a charge/discharge plan for each vehicle such as an electric vehicle and an electricity storage/discharge plan for each storage battery.

The renewable energy power generation amount fluctuation scenario information table 44 stores information about a renewable energy power generation amount fluctuation scenario created by the control unit 20. The grid power demand fluctuation scenario information table 45 stores information about a grid power demand fluctuation scenario created by the control unit 20.

The control unit 20 includes occurrence probability in the grid power fluctuation scenario that the grid power fluctuation scenario may occur; and calculates a charge/discharge plan evaluation value by using the occurrence probability that the grid power fluctuation scenario may occur.

The control unit 20 includes occurrence probability in the renewable energy power generation amount fluctuation scenario that the renewable energy power generation amount fluctuation scenario may occur; and calculates a charge/discharge plan evaluation value by using the occurrence probability that the renewable energy power generation amount fluctuation scenario may occur.

The control unit 20 may be designed to: include the occurrence probability in the grid power fluctuation scenario that the grid power fluctuation scenario may occur, and also includes the occurrence probability in the renewable energy power generation amount fluctuation scenario that the renewable energy power generation amount fluctuation scenario may occur; and calculate the charge/discharge plan evaluation value by using at least one of the occurrence probability that the grid power fluctuation scenario may occur, and the occurrence probability that the renewable energy power generation amount fluctuation scenario may occur.

When charging/discharging the electric vehicle based on the adopted charge/discharge plan, the control unit 20 obtains actual grid power demand prediction information indicating a demand for the grid power and updates the adopted charge/discharge plan based on the obtained grid power demand prediction information.

In this embodiment, a price of the grid power fluctuates due to the demand for the grid power and the grid power demand prediction information table 39 for managing the grid power demand prediction information is information indicating a predicted price of the grid power. The predicted price herein used is, for example, electric power cost described later.

In this embodiment, the operation information table 34 for managing the electric vehicle operation information manages, departure time of day of each vehicle including each electric vehicle, its arrival time of day, and electric power consumed between the departure time of day and the arrival time of day. The control unit 20 identifies an electric power amount required for subsequent operation by each electric vehicle on the basis of the operation information table 34 for managing the electric vehicle operation information and adopts any one charge/discharge plan from among the plurality of proposed charge/discharge plans by setting minimization of the number of battery depletion occurrences during the operation of the electric vehicle as an objective function and setting the constraint condition that the electric vehicle can be charged between the arrival time of day and the departure time of day.

The control unit 20 calculates, as the charge/discharge plan evaluation value, at least one of an evaluation value regarding the stability rate of the grid power and an evaluation value regarding the utilization rate of the renewable energy.

The storage unit 21 retains the base information table 36 for managing the base information about the base where storage batteries are placed and the control unit 20 creates a plurality of proposed charge/discharge plans based on the base information table 36.

In this embodiment, the constraint condition is, for example, that at least one of the renewable energy utilization rate and the grid power stabilization rate is equal to or larger than a preset threshold value.

The input unit 22 accepts information which is input via the aforementioned input device 14. The display unit 23 visualizes necessary information and displays it on the aforementioned display device 15. The communication unit 24 communicates with the in-vehicle terminal 4, the base plan management terminal 5, and the charge/discharge control apparatus 6 via the communication device 17.

On the other hand, the in-vehicle terminal 4 includes a communication unit 46 and a display unit 47. The communication unit 46 transmits current status information of a vehicle, in which the relevant in-vehicle terminal 4 is mounted, to the charge/discharge planning apparatus 2. The communication unit 46 has a function that receives the vehicle charge/discharge plan about that vehicle which is transmitted from the charge/discharge planning apparatus 2. The display unit 47 displays the vehicle charge/discharge plan, which is received by the communication unit 46, on a display device (which is not illustrated in the drawing) included in that in-vehicle terminal 4.

The base plan management terminal 5 includes a communication unit 48 and a display unit 49. The communication unit 48 receives a storage battery charge/discharge plan, which is transmitted from the charge/discharge planning apparatus 2, at a base where the relevant base plan management terminal 5 is installed. The display unit 49 has a function that visually displays the storage battery charge/discharge plan, which is received by the communication unit 48, on a display device (which is not illustrated in the drawing) included in that base plan management terminal 5.

The charge/discharge control apparatus 6 includes a communication unit 50 and a control unit 51. The communication unit 50 has a function that receives a vehicle charge/discharge plan and a storage battery charge/discharge plan, which are transmitted from the charge/discharge planning apparatus 2, at a base where that charge/discharge control apparatus 6 is installed. The control unit 51 controls charging/discharging of the vehicle according to the vehicle charge/discharge plan received by the communication unit 50. The control unit 51 controls charging/discharging of the storage battery according to the storage battery charge/discharge plan received by the communication unit 50.

The charge/discharge planning system 1 including the charge/discharge planning apparatus 2 according to this embodiment has the above-described configuration; and next, an explanation will be provided about vehicle charge/discharge plan and storage battery charge/discharge plan creation processing as an example of a charge/discharge planning method with reference to each of the above-mentioned drawings. Firstly, the outline of the charge/discharge planning method will be explained.

The charge/discharge planning method is a charge/discharge planning method of the charge/discharge planning apparatus 2 for creating a charge/discharge plan for at least one electric vehicle by grid power by at least one of a plurality of electric power sources including electric power generated using renewable energy and electric power of a storage battery, wherein the charge/discharge planning method includes: a retaining step of causing the storage unit 21 to retain the operation information table 34 for managing the electric vehicle operation information indicating the operation plan of electric vehicles, the vehicle information table 35 for managing the vehicle information indicating the status of the electric vehicles, the charger information table 37 for managing the charger information indicating information about chargers, the storage battery information table 38 for managing the storage battery information indicating information about storage batteries, and at least one of the grid power demand prediction information table 39 for managing the grid power demand prediction information indicating a demand prediction for the grid power and the weather forecast information table 40 for managing the weather forecast information indicating a forecast of the weather information; a charge/discharge plan creation step executed by the control unit 20 creating a plurality of proposed charge/discharge plans based on the operation information table 34 for managing the electric vehicle operation information, the vehicle information table 35 for managing the vehicle information, the charger information table 37 for managing the charger information, the storage battery information table 38 for managing the storage battery information, and at least one of the grid power demand prediction information table 39 for managing the grid power demand prediction information and the weather forecast information table 40 for managing the weather forecast information; a scenario creation step executed by the control unit 20 creating a renewable energy power generation amount fluctuation scenario with a changed power generation amount of the renewable energy, and a grid power fluctuation scenario with a changed demand for the grid power on the basis of at least one of the weather forecast information table 40 for managing the weather prediction information and the grid power demand prediction information table 39 for managing the grid power demand prediction information; an evaluation value calculation step executed by the control unit 20 executing a simulation regarding each of the plurality of proposed charge/discharge plans under at least one of the renewable energy power generation amount fluctuation scenario and the grid power fluctuation scenario and calculating a charge/discharge plan evaluation value based on an execution result of the simulation regarding the plurality of proposed charge/discharge plans; and a charge/discharge plan adoption step executed by the control unit 20 adopting any one charge/discharge plan from among the plurality of proposed charge/-discharge plans on the basis of the calculated charge/discharge plan evaluation value so that a preset constraint condition will be satisfied.

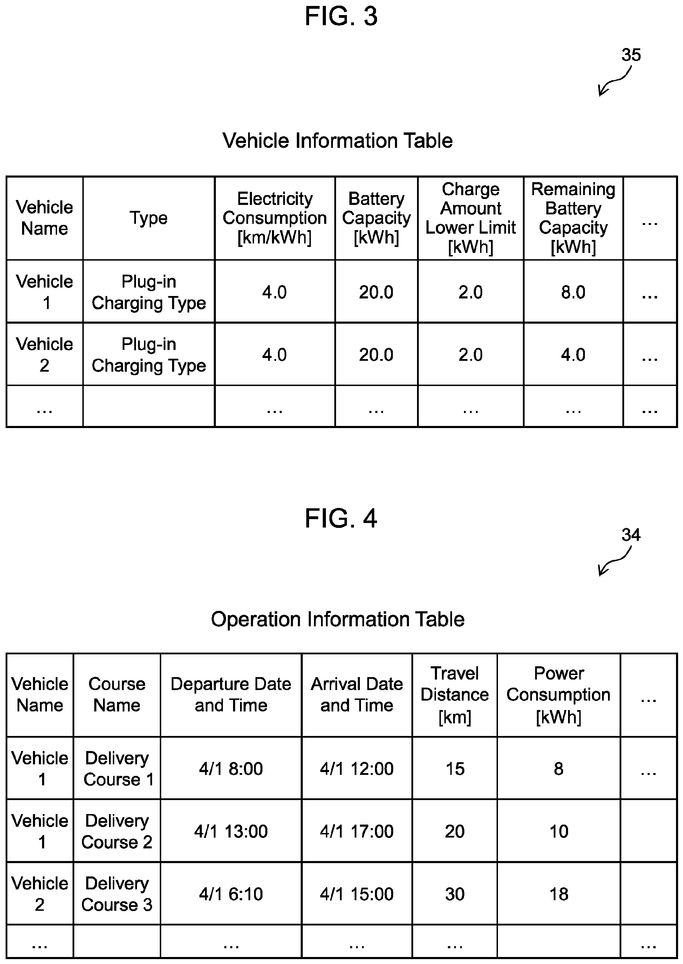

Fig. 3 is a diagram illustrating an example of the vehicle information table 35. The vehicle information table 35 has at least a "Vehicle Name" for identifying the relevant vehicle, a "Type" indicating the type of the relevant vehicle, "Energy Efficiency" indicating fuel economy of the vehicle, a "Battery Capacity" indicating the battery capacity of the vehicle, and a "Remaining Battery Capacity" indicating the remaining vehicle battery capacity at the time of reception of the vehicle information. Furthermore, the vehicle information table 35 may have a "Charge Amount Lower Limit" indicating the minimum necessary charge amount for the vehicle to operate. The "Type" indicating the type of the vehicle manages, for example, that "Vehicle 1" is of a "Plug-in Charging Type." The "Plug-in Charging Type" means, for example, a form of charging by inserting a charge plug of a charger to a battery which is mounted in the vehicle in a manner incapable of free attachment or removal. Incidentally, the "Plug-in Charging Type" may be, for example, a form of discharging to a storage battery by inserting a charge plug of a charger to the battery which is mounted in the vehicle in a manner incapable of free attachment or removal (i.e., a form of charging the storage battery with the electric power of the relevant battery). Furthermore, the vehicle information table 35 may have a "$CO_2$ Emission Factor (kg/kWh)" which is not indicated in the drawing, but indicates a $CO_2$ emission amount per unit cost of energy efficiency.

Fig. 4 is a diagram illustrating an example of the operation information table 34. The operation information table 34 has at least columns of a "Vehicle Name" for identifying the relevant vehicle, a "Course Name" indicating a delivery course in charge, a "Departure Date and Time" indicating a date and time which is a departure date and time of the delivery course, an "Arrival Date and Time" indicating a date and time which is an arrival date and time of the delivery course, a "Travel Distance" indicating the travel distance of the delivery course, and "Power Consumption" indicating the power consumption of the delivery course.

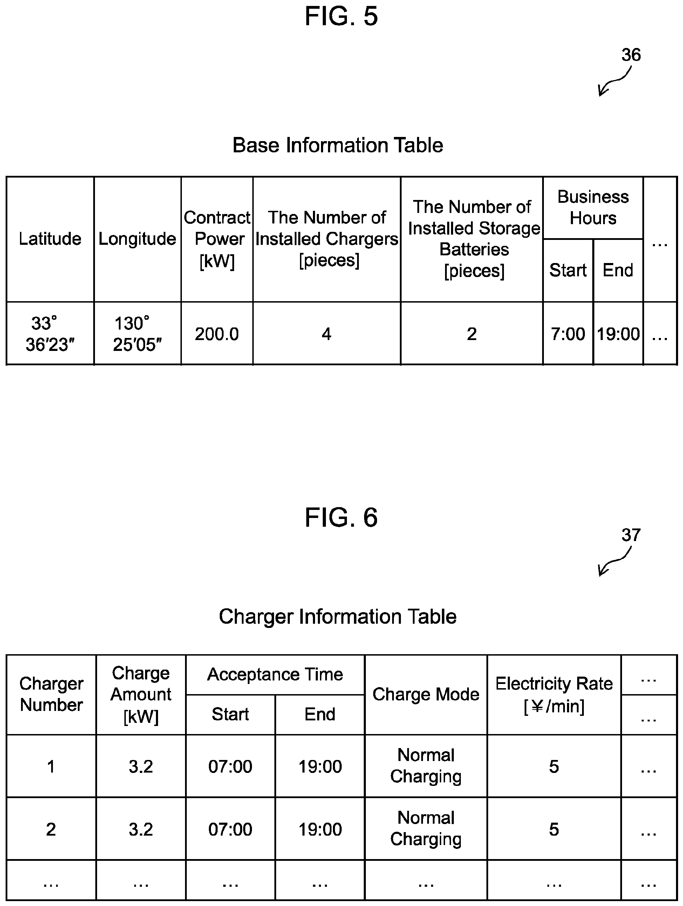

Fig. 5 is a diagram illustrating an example of the base information table 36. The base information table 36 has at least "Contract Power" indicating a contract power value of an electric power plan for the grid power pursuant to which the relevant base has a contract with an electric power company. The base information table 36 may have a "Latitude" indicating the latitude of the relevant location and a "Longitude" indicating the longitude of the relevant base. The base information table 36 may have the "Number of Installed Chargers" and the "Number of Installed Storage Batteries" indicating the number of installed chargers and the number of installed storage batteries, respectively. Furthermore, the base information table 36 may have, regarding "Business Hours: Start and End Time," "Start Time" indicating the starting time of business of the relevant base starts, and "End Time" indicating the ending time of business of the relevant base.

Fig. 6 is a diagram illustrating an example of the charger information table 37. The charger information table 37 has at least a "Charger Number" for identifying the relevant charger at the base, a "Charge Amount" indicating a charge amount per unit time capable of charging by using the charger, and "Acceptance Time" indicating time capable of using the charger. The "Acceptance Time" may have a "Start" indicating start time of an acceptable period and an "End" indicating end time of the acceptable period. The charger information table 37 may also have a "Charge Mode" indicating an available charge mode of the charger. Furthermore, the charger information table 37 may also have an "Electricity Rate" indicating an electricity rate required for charging per unit time.

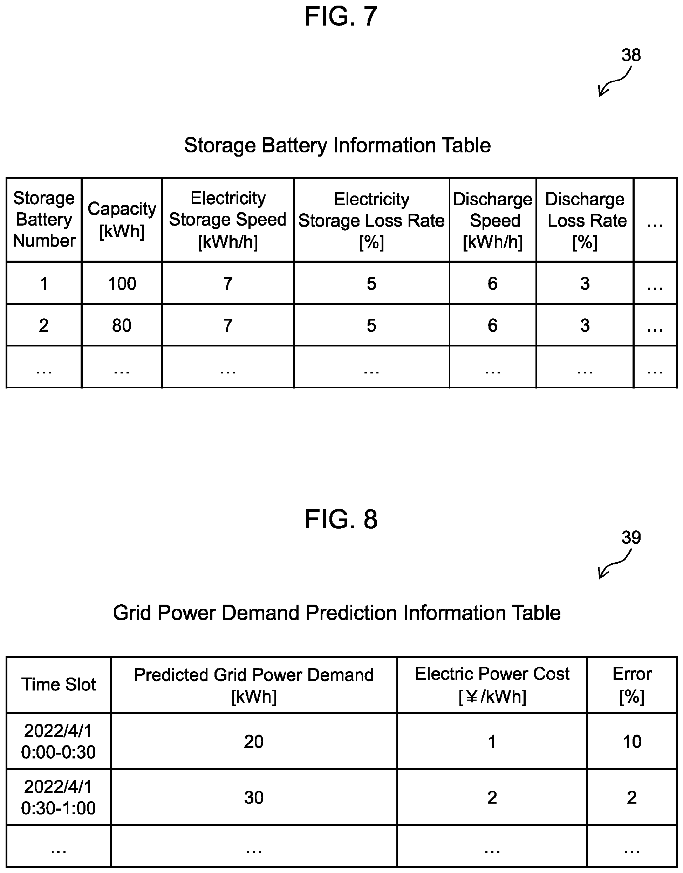

Fig. 7 is a diagram illustrating an example of the storage battery information table 38. The storage battery information table 38 has at least a "Storage Battery Number" for identifying the relevant storage battery installed at the base, a "Capacity" indicating a storage battery capacity, an "Electricity Storage Speed" indicating an electricity storage amount per hour, and a "Discharge Speed" indicating a discharge amount per hour. Furthermore, the storage battery information table 38 may also have an "Electricity Storage Loss Rate" indicating a loss rate upon storing electricity and a "Discharge Loss Rate" indicating a loss rate upon discharging.

Fig. 8 is a diagram illustrating an example of the grid power demand prediction information table 39. The grid power demand prediction information table 39 has at least a "Time Slot" indicating a time slot at certain intervals and a "Predicted Grid Power Demand" indicating a demanded electric power amount of the grid power which is predicted for the relevant time slot.

Instead of the "Predicted Grid Power Demand," for example, a ratio of the predicted demanded electric power amount of the grid power to a maximum power load may be used. Furthermore, the grid power demand prediction information table 39 may also have an "Electric Power Cost" indicating the electric power cost of the relevant time slot and an "Error" indicating a prediction error.

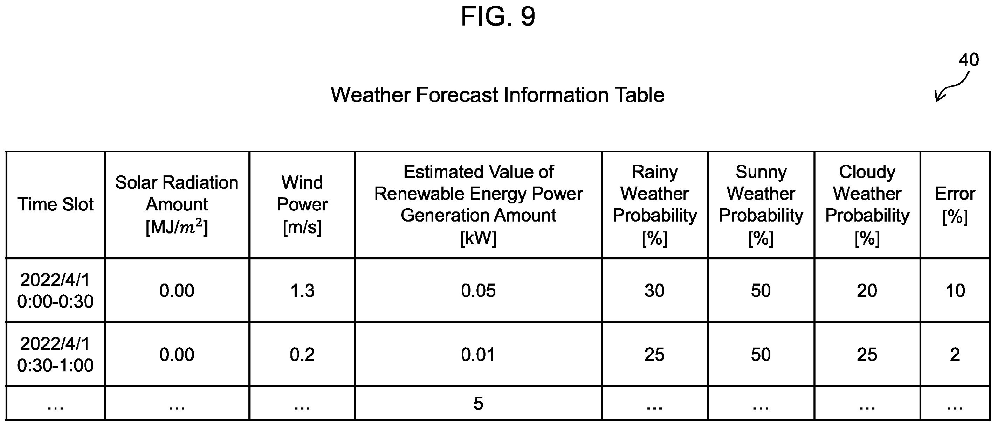

Fig. 9 is a diagram illustrating an example of the weather forecast information table 40. The weather forecast information table 40 has at least a "Time Slot" indicating a time slot at certain intervals, a "Solar Radiation Amount" indicating a predicted solar radiation amount for the relevant time slot, "Wind Power" indicating predicted wind power for the relevant time slot, and "Rainy Weather Probability," "Sunny Weather Probability," and "Cloudy Weather Probability" indicating probability of rainy, sunny, and cloudy weather, respectively. Furthermore, the weather forecast information table 40 may have an "Error" indicating a forecast error.

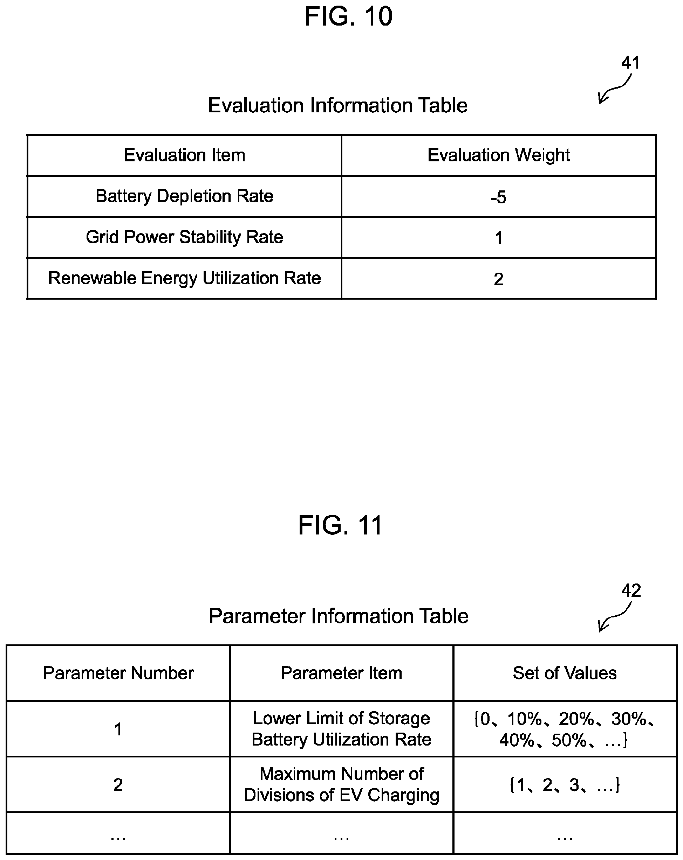

Fig. 10 is a diagram illustrating an example of the evaluation information table 41. The evaluation information table 41 has at least an "Item" indicating an item which influences an evaluation function and "Evaluation Weight" indicating weight for each item in the evaluation function.

Fig. 11 is a diagram illustrating an example of the parameter information table 42. The parameter information table 42 has at least a "Parameter Number" indicating the parameter number used upon the proposed charge/discharge plan creation processing, a "Parameter Item" indicating the relevant item, and a "Set of Values" indicating a set of values corresponding to each item.

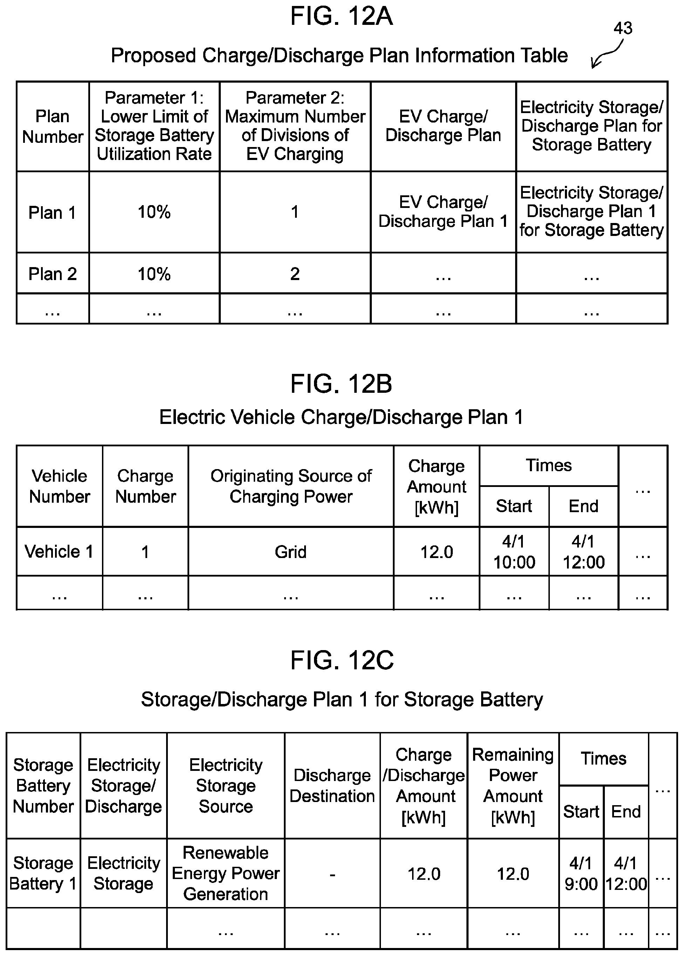

Fig. 12A is a diagram illustrating an example of the proposed charge/discharge plan information table 43. The proposed charge/discharge plan information table 43 has at least a "Proposed Plan Number" for identifying the number for the relevant proposed plan number, "Parameter 1" and "Parameter 2" indicating the respective values of Parameter 1 and Parameter 2, an "Electric Vehicle Charge/Discharge Plan" indicating planned charging/discharging time of day of an electric vehicle, an originating source of charging power, a discharge destination, and a charge/discharge amount, and a "Storage Battery Electricity Storage/Discharge Plan" indicating planned electricity storage time of day of a storage battery, an electricity storage source, and an electricity storage amount, or a discharge time of day, a discharge destination, and a discharge amount.

Fig. 12B is a diagram illustrating an example of the electric vehicle charge/discharge plan. The electric vehicle charge/discharge plan has at least a "Vehicle Number" for identifying a plurality of vehicles including electric vehicles, a "Charger Number" for identifying the relevant charger among chargers, an "Originating Source of Charging Power" indicating a charging source of the relevant charger, a "Charge Amount" indicating a charge amount of the charger, and "Time (Start and End)" indicating the start and end of charging to the charger.

Fig. 12C is a diagram illustrating an example of the storage battery electricity storage/discharge plan. The storage battery electricity storage/discharge plan has at least a "Storage Battery Number" for identifying the relevant storage battery among storage batteries, "Electricity Storage/Discharge" indicating whether electricity storage or discharge to the storage battery is performed, a "Discharge Destination" indicating the discharge destination of the storage battery, an "Electricity Storage/Discharge Amount" indicating the electricity storage/discharge amount of the storage battery, a "Remaining Power Amount" indicating a remaining power amount of the storage battery, and "Time (Start and End)" indicating the start and end of charging to the storage battery.

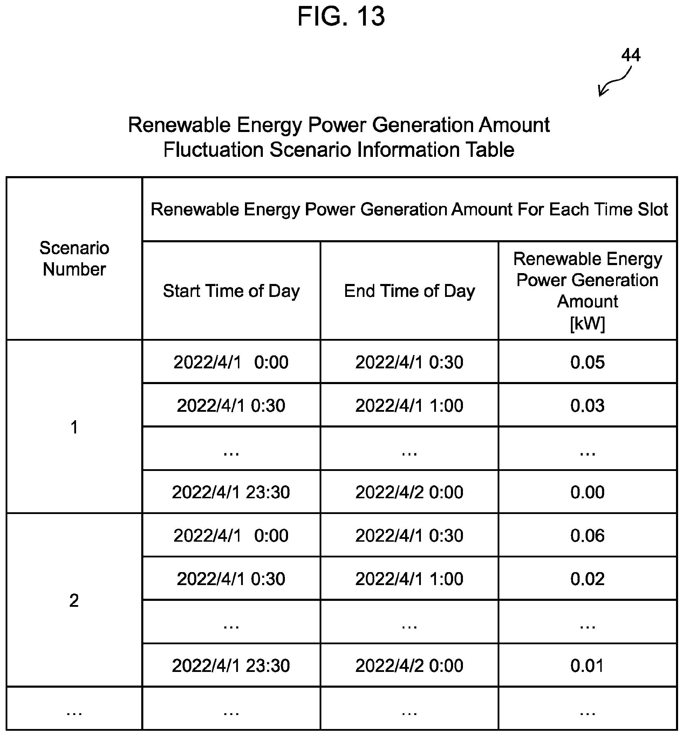

Fig. 13 is a diagram illustrating an example of the renewable energy power generation amount fluctuation scenario information table 44. The renewable energy power generation amount fluctuation scenario information table 44 has at least a "Scenario Number" for identifying the relevant scenario and a "Renewable Energy Power Generation Amount For Each Time Slot" indicating the renewable energy power generation amount for each time slot.

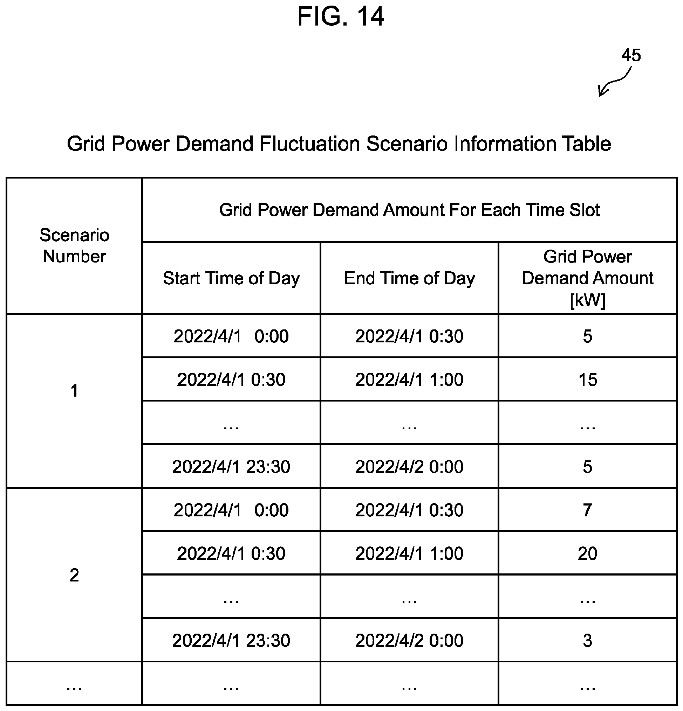

Fig. 14 is a diagram illustrating an example of the grid power demand fluctuation scenario information table 45. The grid power demand fluctuation scenario information table 45 has at least a "Scenario Number" for identifying the relevant scenario and a "Grid Power Demand Amount for Each Time Slot" indicating the grid power demand amount for each time slot.

The grid power stability rate is calculated, for example, by calculating the grid power demand fluctuation scenario information table 45 and the proposed charge/discharge plan information table 43 according to the following both expressions (1).

$$\text{Grid Power Stability Rate} = (\text{The Number of Time Slots in Which Sum Total of Used Grid power and Grid Demand Is Equal to or Less Than Grid Load}) / \text{Total Time Slots} \tag{1}$$

$$\text{Used Grid Power} = \text{Electric Vehicle Charge Amount} - \text{Electric Vehicle Discharge Amount} + \text{Storage Battery Electricity Storage Amount} - \text{Storage Battery Discharge Amount} - \text{Directly Used Renewable Energy Power Generation Amount} \tag{1}$$

The renewable energy utilization rate is calculated, for example, by using the storage battery information table 38 and the proposed charge/discharge plan information table 43 according to the following expression (2).

$$\text{Renewable Energy Utilization Rate} = \{\text{Directly Used Renewable Energy Power Generation Amount} + \text{Renewable Energy Power Generation Amount Used Via Storage Battery} \times (\text{Electricity Storage Loss Rate} + \text{Discharge Loss Rate})\} / \text{Renewable Energy Power Generation Amount} \tag{2}$$

In step S600, the proposed charge/discharge plan evaluation unit 33 calculates an average of evaluation values of all the scenarios regarding each candidate solution. The evaluation value of each scenario is calculated by using the evaluation information table 41 and the proposed charge/discharge plan information table 43 according to the following expression (3).

$$\text{Evaluation Value} = (\text{Evaluation Weight of Battery Depletion Rate}) \times (\text{Evaluation Value of Battery Depletion Rate}) + (\text{Evaluation Weight of Grid Power Stability Rate}) \times (\text{Evaluation Value of Grid Power Stability Rate}) \tag{3}$$

The average of the evaluation values of all the scenarios is calculated according to the following expression (4).

$$\text{Average of Evaluation Values of All Scenarios} = (\Sigma_{\text{scenarios}} \text{Evaluation Values}) / \text{The Number of Scenarios} \tag{4}$$

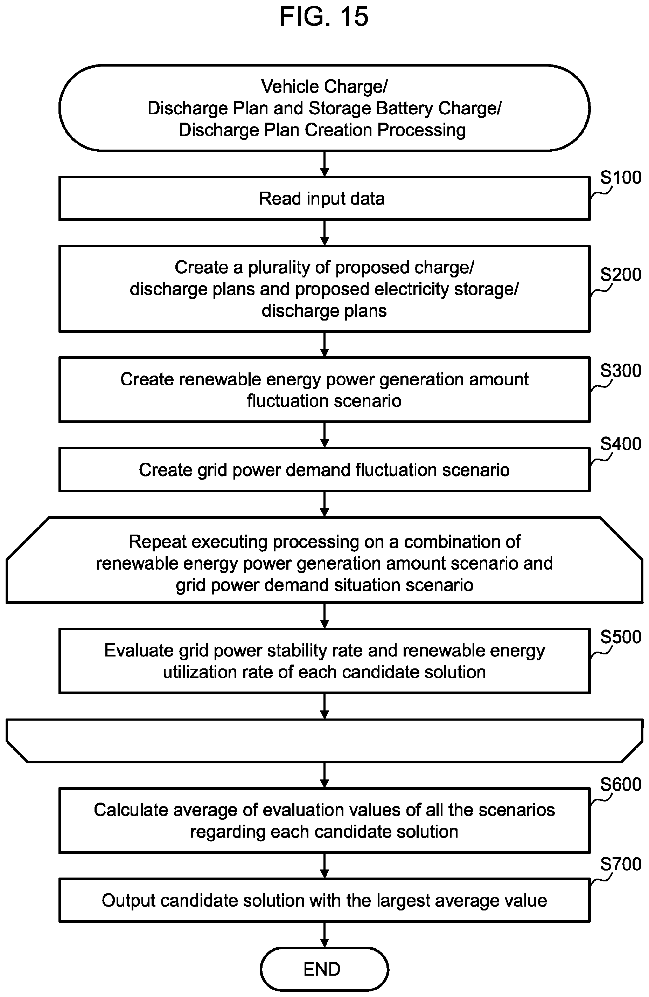

Fig. 15 is a flowchart illustrating an example of a process sequence of vehicle charge/discharge plan and storage battery charge/discharge plan creation processing according to the first embodiment. The vehicle charge/discharge plan and storage battery charge/discharge plan creation processing is started when, for example, the input unit 22 receives specified input. When the above-mentioned plan creation processing is started, the charge/discharge planning apparatus 2 reads the input data from the in-vehicle terminal 4, the charge/discharge control apparatus 6, and the input device 14 to the storage unit 21 (step S100).

In step S100, the control unit 20 causes the storage unit 21 to read, for example, from the input device 14, etc., the operation information table 34, the vehicle information table 35, the base information table 36, the charger information table 37, the storage battery information table 38, the grid power demand prediction information table 39, the weather forecast information table 40, the evaluation information table 41, and the parameter information table 42.

In step S200, the proposed charge/discharge plan creation unit 32 performs the proposed charge/discharge plan creation processing on all the electric vehicles and all the storage batteries by using the operation information table 34, the vehicle information table 35, the base information table 36, the charger information table 37, the storage battery information table 38, at least one of the grid power demand prediction information table 39 and the weather forecast information table 40, the evaluation information table 41, and the parameter information table 42.

The proposed charge/discharge plan creation unit 32 creates a plurality of charge/discharge plans including at least one of a charge/discharge plan for each vehicle such as each electric vehicle and an electricity storage/discharge plan for each storage battery and stores, as a candidate solution, information about the plurality of charge/discharge plans in the proposed charge/discharge plan information table 43 (step S200).

The renewable energy power generation amount fluctuation scenario creation unit 30 creates a plurality of renewable energy fluctuation scenarios regarding the renewable energy power generation amount for a certain time period from then according to the possibility of weather changes based on the weather forecast information of the weather forecast information table 40. The plurality of renewable energy fluctuation scenarios include a renewable energy utilization rate. The renewable energy power generation amount fluctuation scenario creation unit 30 stores information about the created renewable energy power generation amount fluctuation scenarios in the renewable energy power generation amount fluctuation scenario information table 44 (step S300).

The grid power demand fluctuation scenario creation unit 31 creates a plurality of grid power demand fluctuation scenarios regarding a grid power demand for a certain time period from then according to the possibility of demand changes based on the aforementioned grid power demand prediction information (step S400). The plurality of grid power demand fluctuation scenarios include a grid power stability rate. The grid power demand fluctuation scenario creation unit 31 stores information about the created grid power demand fluctuation scenarios in the grid power demand fluctuation scenario information table 45.

The proposed charge/discharge plan evaluation unit 33 evaluates the grid power stability rate and the renewable energy utilization rate, respectively, which are included in each candidate solution regarding a combination of the renewable energy power generation amount scenario and the grid power demand fluctuation scenario (step S500).

Specifically, in step S500, the proposed charge/discharge plan evaluation unit 33 checks, regarding a combination of the renewable energy power generation amount scenario and the grid power demand fluctuation scenario, the operation of each candidate solution under the combination of these scenarios by means of a simulation and evaluates whether or not each of the grid power stability rate and the renewable energy utilization rate is equal to or larger than a threshold value which satisfies each constraint condition.

The proposed charge/discharge plan evaluation unit 33 evaluates that the grid power stability rate and the renewable energy utilization rate which are higher have higher evaluation values. When the evaluation of each candidate solution regarding all the scenarios is finished, the proposed charge/discharge plan evaluation unit 33 calculates the average of the evaluation values of all the scenarios regarding each candidate solution (step S600).

In step S700, the proposed charge/discharge plan evaluation unit 33 outputs, for example, a candidate solution with the largest average value of the evaluation values to the display unit 23. The communication unit 24 transmits information about the proposed charge/discharge plan that is this candidate solution, via the network 3, to the in-vehicle terminal 4, the base plan management terminal 5, and the charge/discharge control apparatus 6.

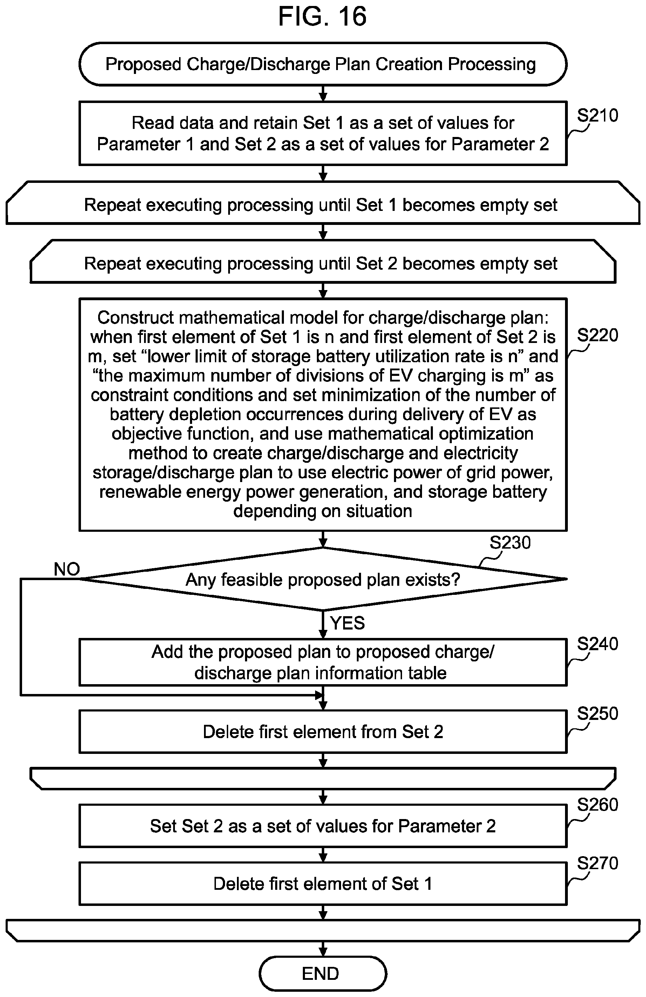

Fig. 16 is a flowchart illustrating an example of a process sequence of proposed charge/discharge plan creation processing. When the proposed charge/discharge plan creation processing is started, the proposed charge/discharge plan creation unit 32 reads the operation information table 34, the vehicle information table 35, the base information table 36, the charger information table 37, the storage battery information table 38, the grid power demand prediction information table 39, the weather forecast information table 40, the evaluation information table 41, and the parameter information table 42 from the storage unit 21 (step S210). The proposed charge/discharge plan creation unit 32 retains a set of values for Parameter 1 in the read parameter information table 42 as Set 1 and retains a set of values for Parameter 2 as Set 2 (step S210).

The proposed charge/discharge plan creation unit 32 repeats executing step S220 to step S260 until Set 1 becomes an empty set. The proposed charge/discharge plan creation unit 32 repeats executing step S220 to step S240 until Set 2 becomes an empty set.

The proposed charge/discharge plan creation unit 32 sets a constraint condition, for example, that after an electric vehicle finishes a certain task and returns to a base for charging/discharging, a built-in battery can be charged at that base before a departure for the next task; and constructs a plan model which is at least one of a charge/discharge plan model and an electricity storage/discharge plan model, for example, in order to realize at least one of the following: to enable charging to the electric vehicle with the electric power that is at least any one of the grid power, the renewable energy generated power, and the electric power of the storage battery; to enable electricity storage in a storage battery with the electric power that is at least any one of the grid power and the renewable energy generated power; and to enable discharging from the electric power of the storage battery to the electric vehicle or discharging as an electric power source for a building(s).

When a first element of Set 1 is n and a first element of Set 2 is m, the proposed charge/discharge plan creation unit 32 sets the "lower limit of the storage battery utilization rate is n" and the "maximum number of divisions of electric vehicle charging is m" as constraint conditions and adds them to a mathematical model. The proposed charge/discharge plan creation unit 32 solves the mathematical model, for which minimization of the number of battery depletion occurrences during delivery of the electric vehicle is set as an objective function, by a general mathematical optimization method (step S220).

The proposed charge/discharge plan creation unit 32 judges whether or not a proposed plan which is feasible has been successfully generated after solving the mathematical model. If any feasible proposed plan exists, the proposed charge/discharge plan creation unit 32 executes step S230 and step S240; and on the other hand, if any feasible proposed plan does not exist, the proposed charge/discharge plan creation unit 32 executes S240.

In step S230, the proposed charge/discharge plan creation unit 32 adds the proposed plan to the proposed charge/discharge plan information table 43. In step S240, the proposed charge/discharge plan creation unit 32 deletes the first element from Set 2. If Set 2 is an empty set, the proposed charge/discharge plan creation unit 32 executes step S250. If Set 1 is not an empty set, the proposed charge/discharge plan creation unit 32 returns to and executes step S220.

The proposed charge/discharge plan creation unit 32 sets Set 2 as a set of values for Parameter 2 (step S250). The proposed charge/discharge plan creation unit 32 deletes the first element from Set 1 (step S260). If Set 1 is an empty set, the proposed charge/discharge plan creation unit 32 terminates the proposed charge/discharge plan creation processing. If Set 1 is not an empty set, the proposed charge/discharge plan creation unit 32 returns to and executes step S220.

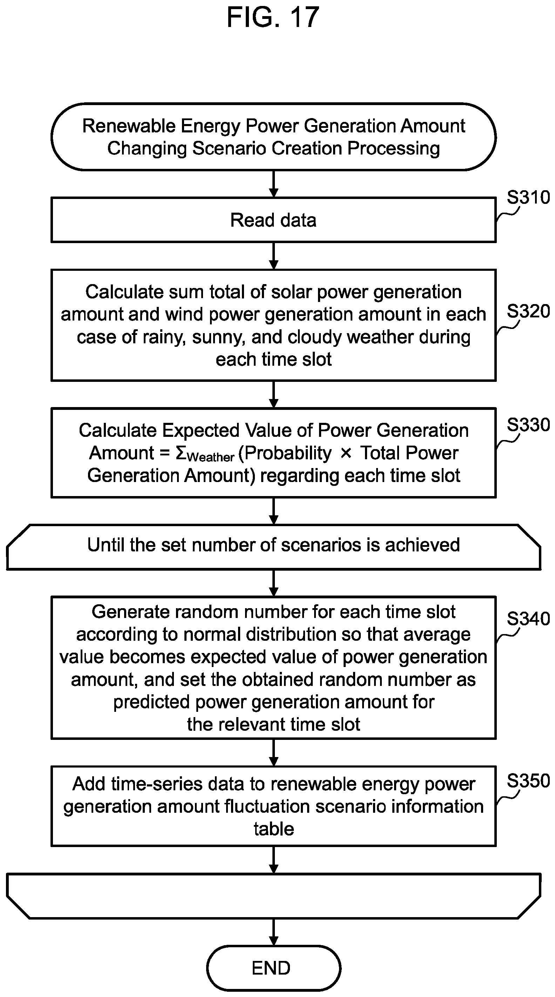

Fig. 17 is a flowchart illustrating an example of a process sequence of renewable energy power generation amount fluctuation scenario creation processing. When the renewable energy power generation amount fluctuation scenario creation processing is started, the renewable energy power generation amount fluctuation scenario creation unit 30 reads the weather forecast information table 40 from the storage unit 21 (step S310).

The renewable energy power generation amount fluctuation scenario creation unit 30 calculates a sum total of a solar power generation amount and a wind power generation amount of respective cases of rainy, sunny, and cloudy weather in each time slot (step S320). The renewable energy power generation amount fluctuation scenario creation unit 30 calculates an expected value of the power generation amount in each time slot (step S330). The renewable energy power generation amount fluctuation scenario creation unit 30 repeats executing step S340 to step S350 until the set number of scenarios is achieved.

In step S340, the renewable energy power generation amount fluctuation scenario creation unit 3 generates a random number according to normal distribution so that an average value becomes an expected value of the power generation amount for each time slot; and sets it as a predicted power generation amount for the relevant time slot. In step S350, the renewable energy power generation amount fluctuation scenario creation unit 30 adds time-series data to the renewable energy power generation amount fluctuation scenario information table 44.

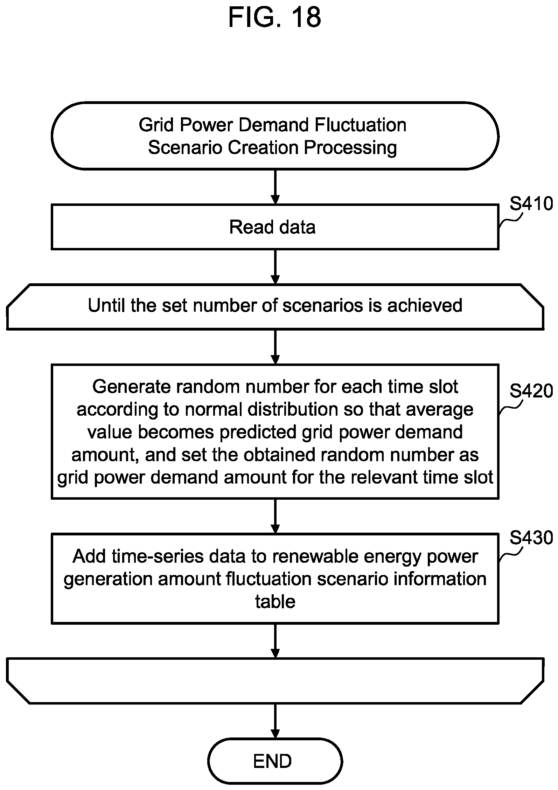

Fig. 18 is a flowchart illustrating an example of a process sequence of grid power demand fluctuation scenario creation processing. When the grid power demand fluctuation scenario creation processing is started, the grid power demand fluctuation scenario creation unit 31 for the grid power demand fluctuation scenario creation processing reads the grid power demand prediction information table 39 from the storage unit 21 (step S410).

The grid power demand fluctuation scenario creation unit 31 repeats executing step S420 to step S430 until the set number of scenarios is achieved. In step S420, the grid power demand fluctuation scenario creation unit 31 generates a random number according to the normal distribution so that an average value becomes a predicted grid power demand amount for each time slot; and sets it as the grid power demand amount for the relevant time slot.

In step S430, the grid power demand fluctuation scenario creation unit 31 adds the time-series data to the grid power demand fluctuation scenario information table 45.

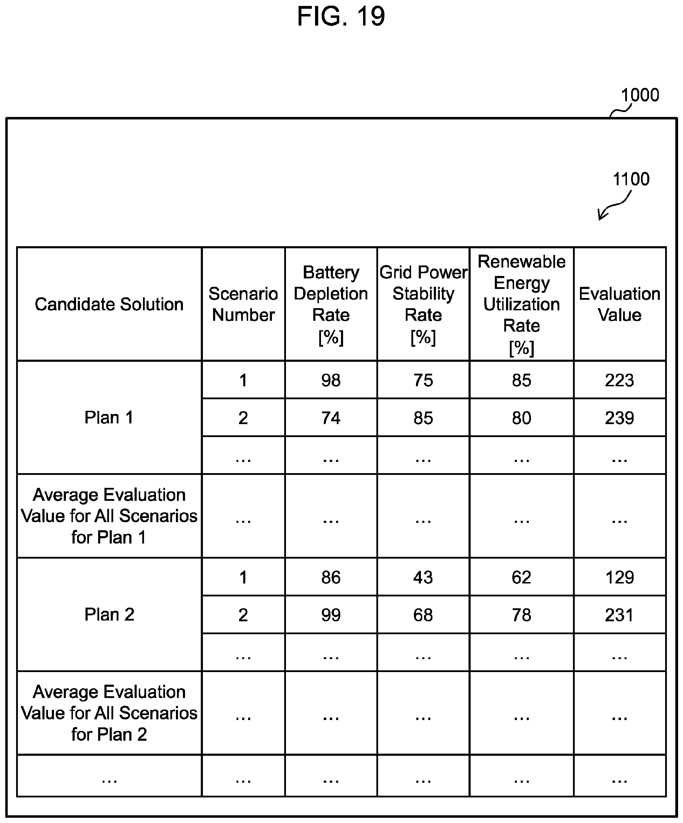

Fig. 19 is a diagram illustrating an example of a display screen 1000 which displays the result outline of the electric vehicle charge/discharge plan. The display screen 1000 is an example of the screen displayed on the display device 15 of the charge/discharge planning apparatus 2. The display screen 1000 has a display area 1100 for evaluation results of all the candidate solutions. The candidate solutions and the evaluation values which are obtained during the calculation, and individual evaluation values for the respective scenarios can be confirmed.

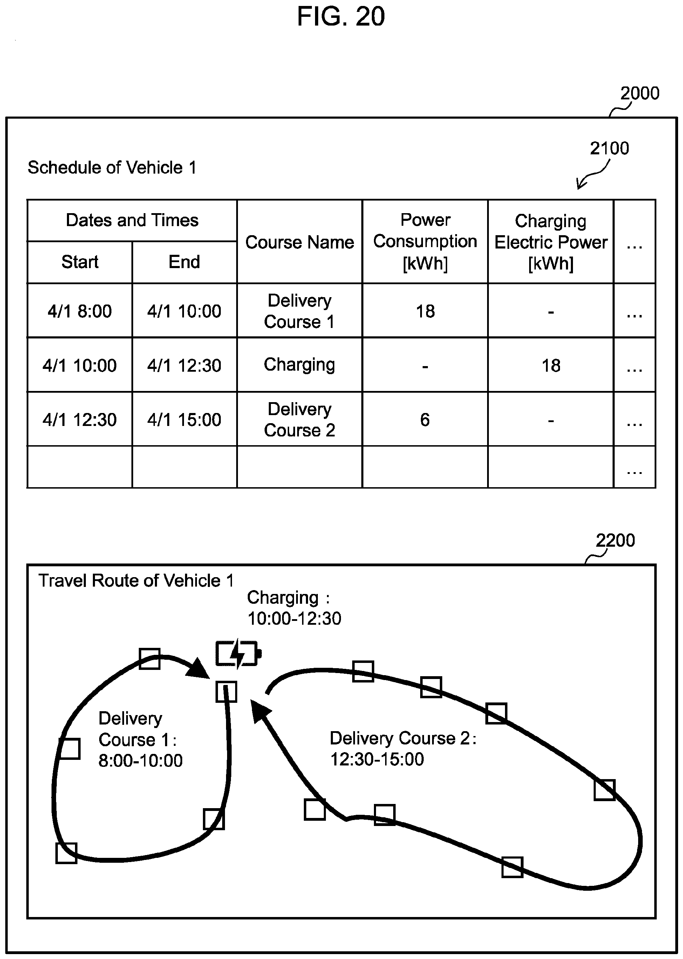

Fig. 20 is a diagram illustrating an example of a display screen 2000 of the in-vehicle terminal 4. The display screen 2000 has a display area 2100 for a schedule of the relevant vehicle according to the best plan and a display area 2200 for a travel route of the vehicle.

The display area 2100 for the schedule of the vehicle including an electric vehicle displays, for example, the vehicle, the dates and times to start and end traveling around a delivery course in association with the relevant task, a course name of the delivery course, the power consumption, and an electric power amount to be charged. Furthermore, in a case of traveling around the delivery course, the further detailed status of the relevant task such as departure, loading, relay, unloading, and arrival may also be displayed. The display area 2200 for the travel route of the vehicle displays the travel route of the vehicle.

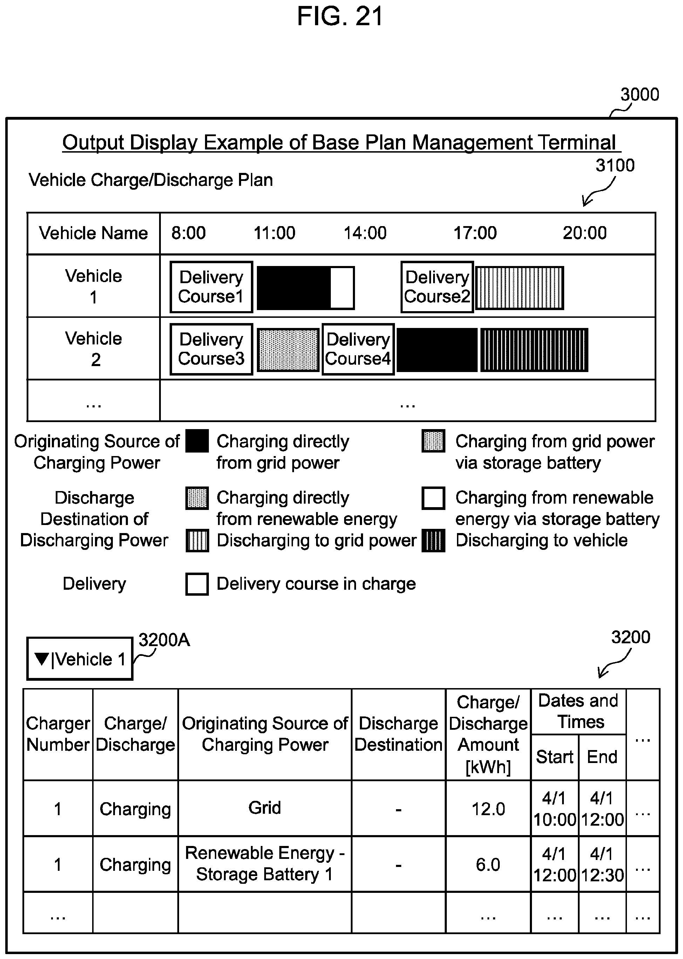

Fig. 21 is a diagram illustrating an example of a display screen 3000 of the base plan management terminal 5. The display screen 3000 mainly has a display area 3100 for a vehicle charge/discharge plan Gantt chart and a display area 3200 for a detailed charge/discharge plan. Incidentally, in the illustrated example, "Renewable Energy" means the "Renewable Energy."

Specifically, the display area 3100 for the vehicle charge/discharge plan Gantt chart displays a charging time slot upon charging each vehicle and an originating source of charging power, a discharging time slot upon discharging and a discharge destination of discharging power, and a delivery course in charge when taking charge of the delivery course.

For example, it is shown that Vehicle 1 traveled in charge of Delivery Course 1 from 8:00 to 10:00, was charged from the grid power from 11:00 to 13:00, was charged with the power generated by the renewable energy via a storage battery from 13:00 to 14:00, traveled in charge of Delivery Course 2 from 15:00 to 17:00, and discharged to the grid power from 17:00 to 19:00.

The display area 3200 for the detailed charge/discharge plan displays a drop-down list 3200A for selecting each vehicle or all vehicles, and a detailed charge/discharge plan(s) regarding the vehicle(s) selected by the drop-down list 3200A.

For example, it is shown that a charger with the charger number "1" was charged for 12.0 [kWh] from the grid power from 10:00 to 12:00 on April 1st. On the other hand, it is shown that a charger with the charger number "2" was charged for 6.0 [kWh] via a storage battery that is "Storage Battery 1" with the renewable energy generated power from 12:00 to 12:30 on April 1st.

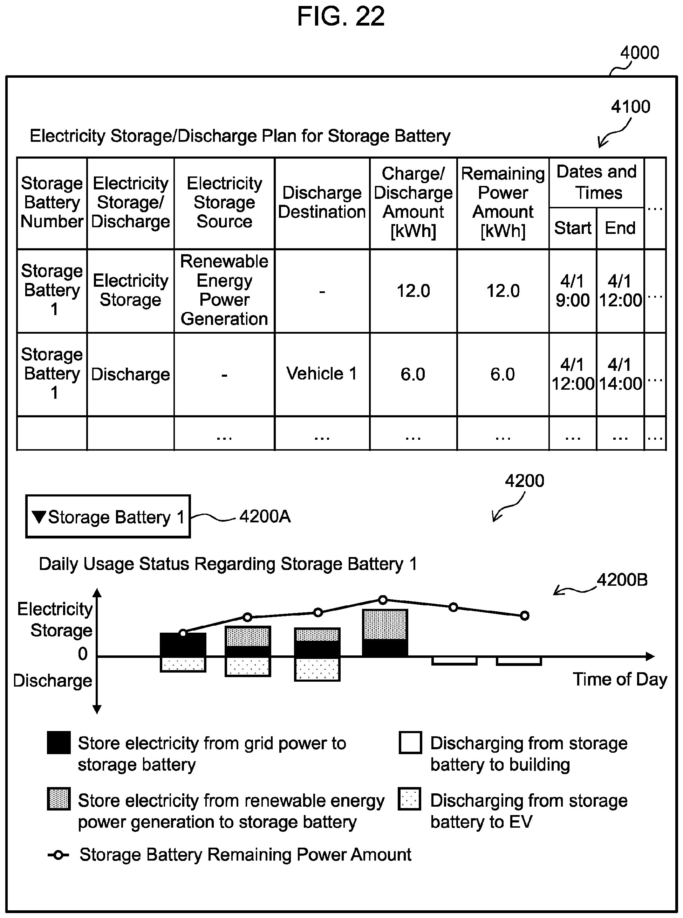

Fig. 22 is a diagram illustrating an example of a display screen 4000 of the base plan management terminal 5. The display screen 4000 has a display area 4100 for a storage battery electricity storage/discharge plan(s) and a display area 4200 for a daily usage status of a storage battery in which the electric power amount of the electricity storage/discharge of each time slot is shown with a bar graph.

The storage battery electricity storage/discharge plan display area 4100 displays all the storage battery electricity storage/discharge plans. The electricity storage/discharge plan displays a storage battery number, electricity storage/discharge status, an electricity storage source, a discharge destination, a charge/discharge amount that is an electric power amount for charging/discharging, a remaining power amount that is a remaining amount of the electric power after performing the electricity storage/discharge, and dates and times when the relevant state starts and ends. Incidentally, the "Renewable Energy" indicates that the electricity storage source is the electric power generated by the renewable energy.

The storage battery daily usage status display area 4200 has a drop-down list 4200A for selecting each storage battery or all storage batteries and a bar graph 4200B according to the type of the storage battery selected by the drop-down list 4200A. The bar graph 4200B displays the electricity storage/discharge amount for each time slot and displays different originating sources of electric power with different colors. A dotted line displays the remaining power amount for the relevant time slot.

According to the above-described embodiment, a proposed charge/discharge plan which satisfies robustness can be adopted based on the charge/discharge plan evaluation value from among a plurality of proposed charge/-discharge plans by setting the constraint condition, for example, to avoid the battery depletion of the electric vehicle.

(2) Second Embodiment

A charge/discharge planning system including a charge/discharge planning apparatus according to a second embodiment has almost the same configuration and operation of the charge/discharge planning system 1 including the charge/discharge planning apparatus 2 according to the first embodiment, so that an explanation about the similar configuration and operation has been omitted and an explanation will be provided by mainly focusing on the difference between them.

In the second embodiment, the charge/discharge of a replaceable battery is also managed by expanding the target to be charged which is an electric vehicle(s) for the charge/discharge planning system 1 according to the first embodiment to, for example, an electric vehicle(s) of a battery replacement type in which the replaceable-type battery is mounted in a freely attachable/detachable manner.

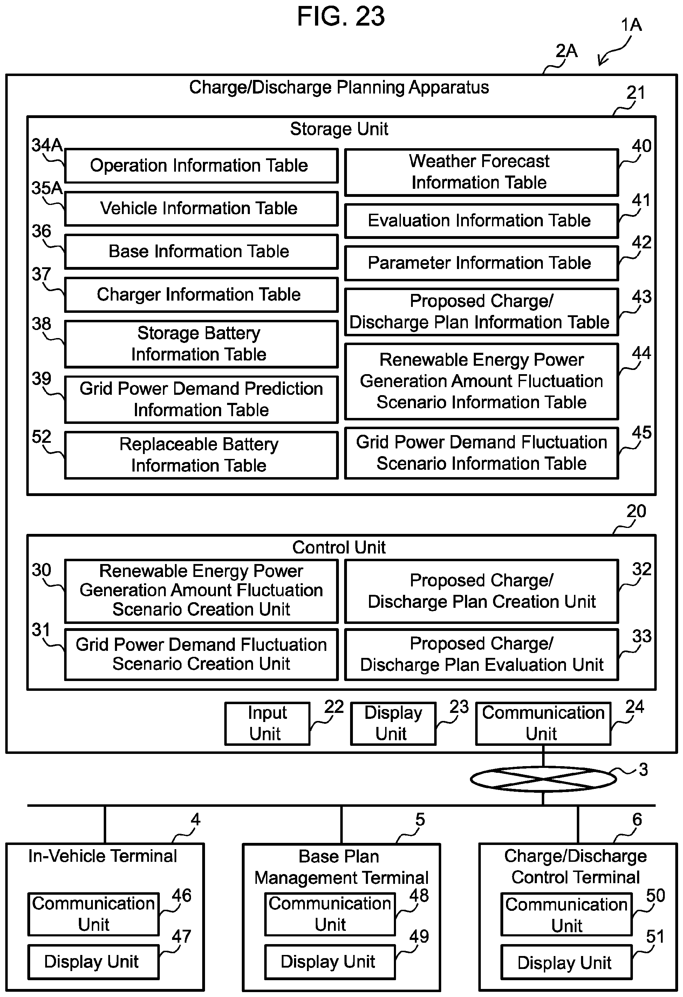

Fig. 23 is a system diagram illustrating an example of the configuration of a charge/discharge planning system 1A equipped with a charge/discharge planning apparatus 2A according to the second embodiment. The charge/discharge planning apparatus 2A according to the second embodiment newly retains a replaceable battery information table 52 in the storage unit 21.

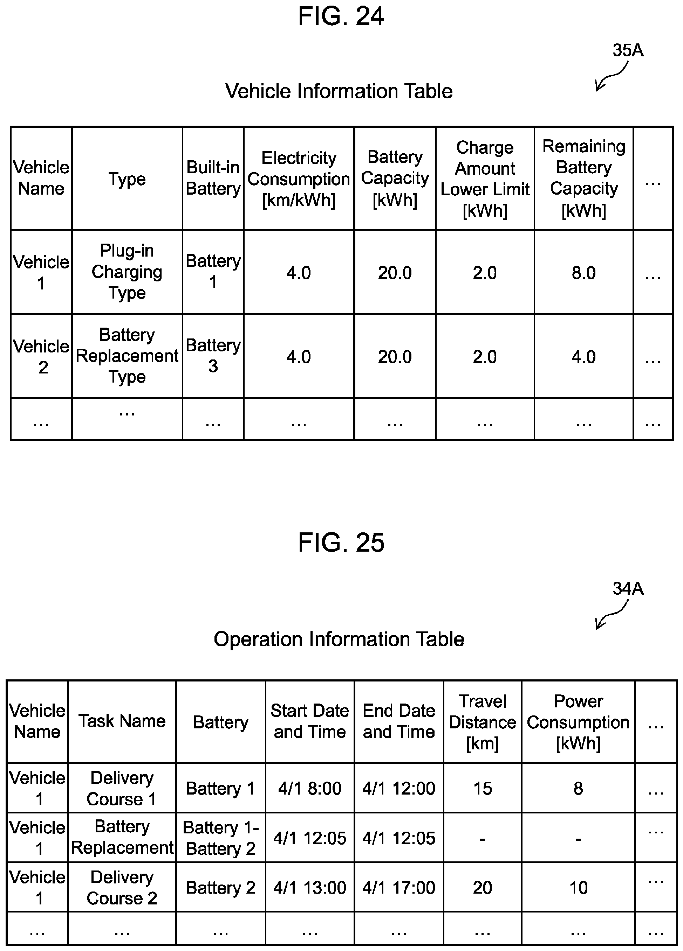

Fig. 24 is a diagram illustrating an example of a vehicle information table 35A according to the second embodiment. The vehicle information table 35A newly has an item "Built-in Battery" indicating a battery name mounted in an original vehicle in addition to the configuration of the vehicle information table 35 according to the first embodiment. Furthermore, the vehicle information table 35A can also deal with a case where the electric vehicle is of a "Battery Replacement Type." The "Type" indicating the type of the vehicle not only manages that, for example, the electric vehicle called "Vehicle 1" is of the "Plug-in Charging Type" as in the first embodiment, but also manages that, for example, the vehicle is of the "Battery Replacement Type." The "Battery Replacement Type" indicates that, for example, the vehicle is an electric vehicle in which the battery can be mounted in a freely attachable/detachable manner.

Fig. 25 is a diagram illustrating an example of an operation information table 34A according to the second embodiment. The operation information table 34A has a new "Battery" column indicating a battery to be mounted in addition to the configuration of the operation information table 34 according to the first embodiment. The operation information table 34A manages a battery replacement schedule with a "Task Name" column and also manages a battery before replacement and a battery after the replacement with the "Battery" column.

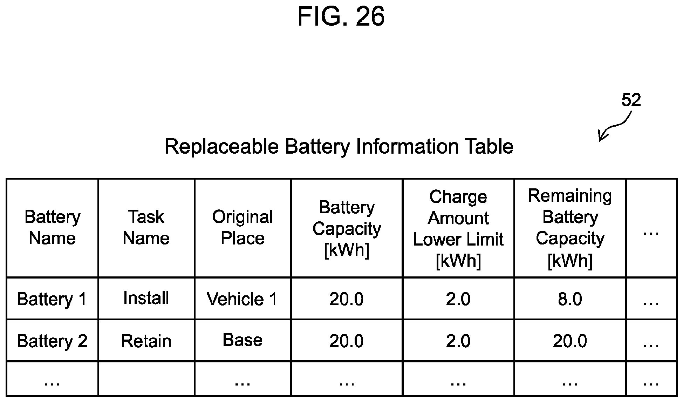

Fig. 26 is a diagram illustrating an example of a replaceable battery information table 52 according to the second embodiment. The replaceable battery information table 52 has columns of at least a "Battery Name" for identifying the relevant battery, a "Task Name" indicating a task in charge, an "Original Place" indicating that the battery is retained in a vehicle, or at a base, which has the battery when the plan is created, a "Battery Capacity" indicating the battery capacity, and a "Remaining Battery Capacity" indicating the remaining battery capacity at the time of reception of the replaceable battery information. Furthermore, the replaceable battery information table 52 may also have a "Charge Amount Lower Limit" indicating a minimum necessary charge amount of the battery.

In step S100 in Fig. 15, the charge/discharge planning apparatus 2 reads not only the input data, but also the replaceable battery information table 52 from the in-vehicle terminal 4, the charge/discharge control apparatus 6, and the input device 14 to the storage unit 21 just like in the first embodiment.

In step S220 in Fig. 16, while the constraint condition is set in the first embodiment so that the electric vehicle can be charged at the base after finishing the delivery task and then returning to the base and before the departure for the next delivery task, the constraint condition is set in the second embodiment so that, for example, the electric vehicle of the battery replacement type can be charged at the base after replacing the battery and then returning to the base and before the battery is mounted in the next electric vehicle.

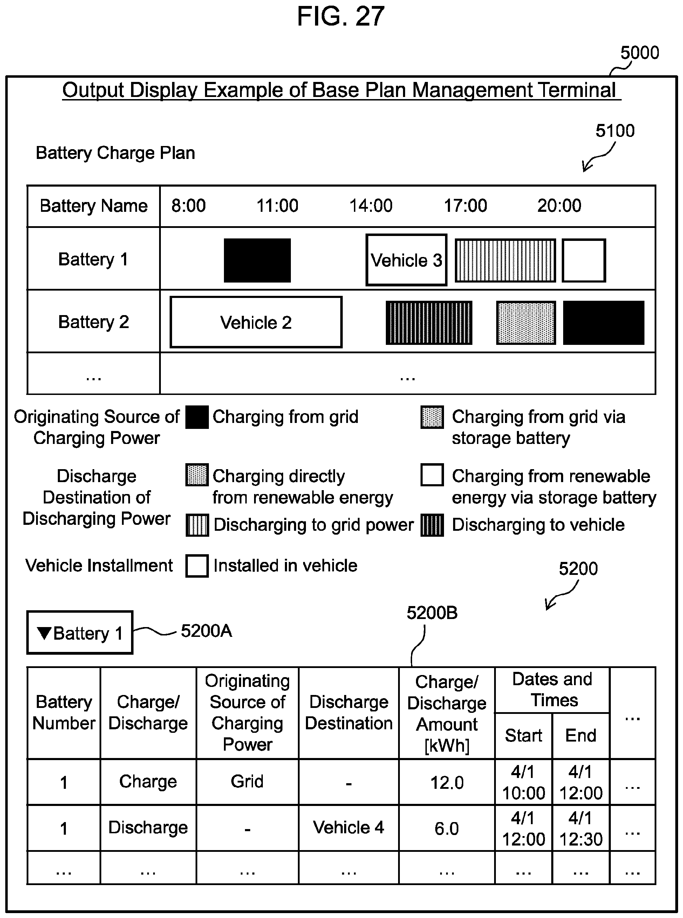

Fig. 27 is a diagram illustrating an example of a display screen 5000 of the base plan management terminal 5 according to the second embodiment. The display screen 5000 according to the second embodiment has a display area 5100 for a battery charge/discharge plan Gantt chart and a display area 5200 for a detailed charge/discharge plan.

Specifically, the display area 5100 for the battery charge/discharge plan Gantt chart displays a vehicle in which each battery is mounted, a mounting time slot, a charging time slot upon charging, an originating source of charging power, a discharging time slot upon discharging, and a discharge destination of discharging power. The display area 5200 for the detailed charge/discharge plan displays a drop-down list 5200A for selecting each battery or all batteries and a detailed charge/discharge plan 5200B for the battery/batteries selected by the drop-down list 5200A.

The charge/discharge planning apparatus according to this embodiment described above is designed to create a charge/discharge plan for at least one electric vehicle by grid power by at least one of a plurality of electric power sources including electric power generated using renewable energy and electric power of a storage battery, wherein the charge/discharge planning apparatus includes: the storage unit 21 that retains the operation information table 34 for managing the electric vehicle operation information indicating an operation plan of the electric vehicle, the vehicle information table 35 for managing the vehicle information indicating a status of the electric vehicle, the charger information table 37 for managing the charger information indicating information about a charger, the storage battery information table 38 for managing the storage battery information indicating information about the storage battery, and at least one of the grid power demand prediction information table 39 for managing the grid power demand prediction information indicating a demand prediction of the grid power and the weather forecast information table 40 for managing the weather prediction information indicating a forecast of weather information; and the control unit 20 that creates the charge/discharge plan. The control unit 20: creates a plurality of proposed charge/discharge plans based on the operation information table 34, the vehicle information table 35, the charger information table 37, the storage battery information table 38, and at least one of the grid power demand prediction information table 39 and the weather forecast information table 40; creates at least one of a renewable energy power generation amount fluctuation scenario with a changed power generation amount of the renewable energy, and a grid power fluctuation scenario with a changed demand for the grid power on the basis of at least one of the weather forecast information table 40 and the grid power demand prediction information table 39; executes a simulation regarding each of the plurality of proposed charge/discharge plans under at least one of the renewable energy power generation amount fluctuation scenario and the grid power fluctuation scenario and calculates a charge/discharge plan evaluation value based on an execution result of the simulation regarding the plurality of proposed charge/discharge plans; and adopts any one charge/discharge plan from among the plurality of proposed charge/discharge plans on the basis of the calculated charge/discharge plan evaluation value so that a preset constraint condition will be satisfied.

Consequently, for example, the proposed charge/discharge plan which satisfies robustness can be selected based on the charge/discharge plan evaluation value from among the plurality of proposed charge/discharge plans by setting the constraint condition, for example, to avoid the battery depletion of the electric vehicle. Therefore, if the risk of electric power supply becoming strained increases attributable to the demand for the grid power which becomes higher than predicted, or the power amount generated from the renewable energy which becomes lower than predicted, it is possible to avoid the battery depletion of the electric vehicle by discharging from the storage battery to the electric vehicle and stabilize the supply of the grid power, while increasing the renewable energy utilization rate.

The control unit 20 includes the occurrence probability in the renewable energy power generation amount fluctuation scenario that the renewable energy power generation amount fluctuation scenario may occur, and includes the occurrence probability in the grid power fluctuation scenario that the grid power fluctuation scenario may occur; calculates the charge/discharge plan evaluation value by using the occurrence probability that at least one of the occurrence probability that the renewable energy power generation amount fluctuation scenario may occur, and the occurrence probability that the grid power fluctuation scenario may occur. Consequently, it is possible to select the proposed charge/discharge plan which satisfies the robustness from among the plurality of proposed charge/discharge plans on the basis of at least one of the occurrence probability that the renewable energy power generation amount fluctuation scenario may occur, and the occurrence probability that the grid power fluctuation scenario may occur.

When charging/discharging the electric vehicle based on the adopted charge/discharge plan, the control unit 20 obtains actual grid power demand prediction information indicating the demand for the grid power and updates the adopted charge/discharge plan based on the obtained grid power demand prediction information. Consequently, it is possible to select the proposed charge/discharge plan which satisfies the robustness, from among the plurality of proposed charge/discharge plans, based on the grid power demand prediction information.

In this embodiment, a price of the grid power fluctuates due to the demand for the grid power; and the grid power demand prediction information table 39 for managing the grid power demand prediction information is information indicating the "Electric Power Cost (see Fig. 8)" as an example of a predicted price of the grid power. Consequently, it is possible to select the proposed charge/discharge plan which satisfies the robustness, from among the plurality of proposed charge/discharge plans, based on the predicted price of the grid power.

In this embodiment, the operation information table 34 for managing the electric vehicle operation information manages a departure time of day of each electric vehicle, its arrival time of day, and electric power consumed between the departure time of day and the arrival time of day. The control unit 20 identifies an electric power amount required for subsequent operation by each electric vehicle based on the operation information table 34 for managing the electric vehicle operation information and adopts any one charge/discharge plan from among the plurality of proposed charge/-discharge plans by setting minimization of the number of battery depletion occurrences during the operation of the electric vehicle as an objective function and setting the constraint condition that the electric vehicle can be charged after the arrival time of day and before the departure time of day. Consequently, it is possible to make sure, according to the adopted charge/discharge plan, that the electric vehicle can be charged so as to avoid the battery depletion during the operation to the maximum possible.

The control unit 20 calculates, as the charge/discharge plan evaluation value, at least one of an evaluation value regarding a stability rate of the grid power and an evaluation value regarding a utilization rate of the renewable energy. Consequently, it is possible to select the proposed charge/discharge plan which satisfies the robustness, from among the plurality of proposed charge/discharge plans, on the basis of the at least one evaluation value.

The storage unit 21 retains the base information table 36 for managing the base information about the base where the storage battery is placed. The control unit 20 creates the plurality of proposed charge/discharge plans on the basis of the base information. Consequently, it is possible to select the proposed charge/discharge plan which satisfies the robustness, from among the plurality of proposed charge/discharge plans, in consideration of the base where the storage battery is placed.

In this embodiment, the constraint condition is set so that, for example, a least one of the utilization rate of the renewable energy and the stabilization rate of the grid power is equal to or larger than a preset threshold value. Consequently, it is possible to select the proposed charge/discharge plan which satisfies the robustness, from among the plurality of proposed charge/discharge plans, so that at least one of the renewable energy utilization rate and the grid power stabilization rate becomes equal to or larger than the threshold value.

The present invention is not limited to the aforementioned embodiments and include various variations. For example, the aforementioned embodiments have been described in detail in order to explain the present invention in an easily comprehensible manner and are not necessarily limited to those having all the configurations explained above. Moreover, part of the configuration of a certain embodiment can be replaced with the configuration of another embodiment and the configuration of another embodiment may be added to the configuration of a certain embodiment. Furthermore, regarding part of the configuration of each embodiment, it is possible to add, delete, or replace the configuration of another embodiment.

Furthermore, regarding each aforementioned configuration, function, processing unit, processing means, etc., part or whole of them may be implemented by hardware by, for example, designing it with integrated circuits. Moreover, each aforementioned configuration, function, etc., may be implemented by software by a processor by interpreting and executing a program for implementing each function. Information such as programs, tables, and files for implementing each function may be stored in memories, storage devices such as Hard Disk Drives and SSDs (Solid State Drives), or recording media such as IC cards, SD cards, and DVDs.

Moreover, control lines and information lines which are considered to be necessary for the explanation are indicated; however, not all control lines or information lines in terms of products may be necessarily indicated. For example, it may be considered that practically almost all the components are connected to each other.

Incidentally, this invention is not limited to the aforementioned embodiments, but includes various variations and equivalent configurations within the gist of the scope of the claims attached hereto. For example, the aforementioned embodiments have been described in detail in order to explain this invention in an easily comprehensible manner, and this invention is not necessarily limited to those having all the described configurations. Furthermore, the respective elements described in parallel in this embodiment may be designed in such a manner that at least one of the respective elements may be connected serially to other elements.

INDUSTRIAL AVAILABILITY

The present invention can be applied to the charge/discharge planning apparatus regarding the technology to create the charge/discharge plan(s).

REFERENCE SIGNS LIST

| 1, 1A: | charge/discharge planning system |
| --- | --- |
| 2: | charge/discharge planning apparatus |
| 2A: | charge/discharge planning apparatus |
| 4: | in-vehicle terminal |
| 5: | base plan management terminal |
| 6: | charge/discharge control apparatus |
| 10: | CPU |
| 11: | RAM |
| 12: | ROM |
| 13: | auxiliary storage device |
| 14: | input device |
| 15: | display device |
| 16: | media reading device |
| 17: | communication device |
| 20: | control unit |
| 30: | renewable energy power generation amount fluctuation scenario creation unit |
| 31: | grid power demand fluctuation scenario creation unit |
| 32: | proposed charge/discharge plan creation unit |
| 33: | proposed charge/discharge plan evaluation unit |
| 34, 34A: | vehicle information table |
| 35, 35A: | operation information table |
| 36: | base information table |
| 37: | charger information table |
| 38: | storage battery information table |
| 39: | grid power demand prediction information table |
| 40: | weather forecast information table |
| 41: | evaluation information table |
| 42: | parameter information table |
| 43: | proposed charge/discharge plan information table |
| 44: | renewable energy power generation amount fluctuation scenario information table |
| 45: | grid power demand fluctuation scenario information table |
| 52: | replaceable battery information table |

**Claims**

1. A charge/discharge planning apparatus for creating a charge/discharge plan for at least one electric vehicle by grid power by at least one of a plurality of electric power sources including electric power generated using renewable energy and electric power of a storage battery,
   the charge/discharge planning apparatus comprising:

   a storage unit that retains electric vehicle operation information indicating an operation plan of the electric vehicle, vehicle information indicating a status of the electric vehicle, charger information indicating information about a charger, storage battery information indicating information about the storage battery, and at least one of grid power demand prediction information indicating a demand prediction of the grid power and weather forecast information indicating a forecast of weather information; and
   a control unit that creates the charge/discharge plan,
   wherein the control unit:

   creates a plurality of proposed charge/discharge plans based on the electric vehicle operation information, the vehicle information, the charger information, the storage battery information, and at least one of the grid power demand prediction information and the weather forecast information;
   creates at least one of a renewable energy power generation amount fluctuation scenario with a changed power generation amount of the renewable energy, and a grid power fluctuation scenario with a changed demand for the grid power on the basis of at least one of the weather forecast information and the grid power demand prediction information;
   executes a simulation regarding each of the plurality of proposed charge/discharge plans under at least one of the renewable energy power generation amount fluctuation scenario and the grid power fluctuation scenario and calculates a charge/discharge plan evaluation value based on an execution result of the simulation regarding the plurality of proposed charge/discharge plans; and
adopts any one charge/discharge plan from among the plurality of proposed charge/discharge plans on the basis of the calculated charge/discharge plan evaluation value so that a preset constraint condition will be satisfied.

2. The charge/discharge planning apparatus according to claim 1,
wherein the control unit:

includes occurrence probability in the grid power fluctuation scenario that the grid power fluctuation scenario may occur; and
calculates the charge/discharge plan evaluation value by using the occurrence probability that the grid power fluctuation scenario may occur.

3. The charge/discharge planning apparatus according to claim 1 or 2,
wherein the control unit:

includes occurrence probability in the renewable energy power generation amount fluctuation scenario that the renewable energy power generation amount fluctuation scenario may occur; and
calculates the charge/discharge plan evaluation value by using the occurrence probability that the renewable energy power generation amount fluctuation scenario may occur.

4. The charge/discharge planning apparatus according to claim 1,
wherein when executing charging/discharging of the electric vehicle based on the adopted charge/discharge plan, the control unit obtains actual grid power demand prediction information indicating a demand for the grid power and updates the adopted charge/discharge plan based on the obtained grid power demand prediction information.

5. The charge/discharge planning apparatus according to claim 1,

wherein a price of the grid power fluctuates due to the demand for the grid power; and
wherein the grid power demand prediction information is information indicating a predicted price of the grid power.

6. The charge/discharge planning apparatus according to claim 1,

wherein the electric vehicle operation information manages a departure time of day of each electric vehicle, its arrival time of day, and electric power consumed between the departure time of day and the arrival time of day; and
wherein the control unit identifies an electric power amount required for subsequent operation by each electric vehicle based on the electric vehicle operation information and adopts any one charge/discharge plan from among the plurality of proposed charge/discharge plans by setting minimization of the number of battery depletion occurrences during the operation of the electric vehicle as an objective function and setting the constraint condition that the electric vehicle can be charged after the arrival time of day and before the departure time of day.

7. The charge/discharge planning apparatus according to claim 1,
wherein the control unit calculates, as the charge/discharge plan evaluation value, at least one of an evaluation value regarding a stability rate of the grid power and an evaluation value regarding a utilization rate of the renewable energy.

8. The charge/discharge planning apparatus according to claim 1,

wherein the storage unit retains base information about a base where the storage battery is placed; and
wherein the control unit creates the plurality of proposed charge/discharge plans based on the base information.

9. The charge/discharge planning apparatus according to claim 1,
wherein the constraint condition is set so that at least one of a utilization rate of the renewable energy and a stabilization rate of the grid power is equal to or larger than a preset threshold value.

10. A charge/discharge planning method of a charge/discharge planning apparatus for creating a charge/discharge plan for at least one electric vehicle by grid power by at least one of a plurality of electric power sources including electric power generated using renewable energy and electric power of a storage battery,
the charge/discharge planning method comprising:

a retaining step of causing a storage unit to retain electric vehicle operation information indicating an operation plan of the electric vehicle, vehicle information indicating a status of the electric vehicle, charger information indicating information about a charger,

storage battery information indicating information about the storage battery, and at least one of grid power demand prediction information indicating a demand prediction of the grid power and weather forecast information indicating a forecast of weather information;

a charge/discharge plan creation step executed by a control unit creating a plurality of proposed charge/discharge plans based on the electric vehicle operation information,

the vehicle information, the charger information, the storage battery information, and at least one of the grid power demand prediction information and the weather forecast information;

a scenario creation step executed by the control unit creating at least one of a renewable energy power generation amount fluctuation scenario with a changed power generation amount of the renewable energy, and a grid power fluctuation scenario with a changed demand for the grid power on the basis of at least one of the weather forecast information and the grid power demand prediction information;

an evaluation value calculation step executed by the control unit executing a simulation regarding each of the plurality of proposed charge/discharge plans under at least one of the renewable energy power generation amount fluctuation scenario and the grid power fluctuation scenario and calculating a charge/discharge plan evaluation value based on an execution result of the simulation regarding the plurality of proposed charge/-discharge plans; and

a charge/discharge plan adoption step executed by the control unit adopting any one charge/discharge plan from among the plurality of proposed charge/discharge plans on the basis of the calculated charge/discharge plan evaluation value so that a preset constraint condition will be satisfied.

# FIG. 1

Charge/Discharge Planning Apparatus — 2

| CPU 10 | RAM 11 | ROM 12 | Auxiliary Storage Device 13 |

| Input Device 14 | Display Device 15 | Media Reading Device 16 | Communication Device 17 |

1

3

| In-Vehicle Terminal 4 | ... | Base Plan Management Terminal 5 | ... | Charge/Discharge Control Apparatus 6 | ... |

# FIG. 2

## Charge/Discharge Planning Apparatus  2  1

### Storage Unit  21

| | |
|---|---|
| 34 Operation Information Table | 40 Weather Forecast Information Table |
| 35 Vehicle Information Table | 41 Evaluation Information Table |
| 36 Base Information Table | 42 Parameter Information Table |
| 37 Charger Information Table | 43 Proposed Charge/ Discharge Plan Information Table |
| 38 Storage Battery Information Table | 44 Renewable Energy Power Generation Amount Fluctuation Scenario Information Table |
| 39 Grid Power Demand Prediction Information Table | 45 Grid Power Demand Fluctuation Scenario Information Table |

### Control Unit  20

| | |
|---|---|
| 30 Renewable Energy Power Generation Amount Fluctuation Scenario Creation Unit | 32 Proposed Charge/ Discharge Plan Creation Unit |
| 31 Grid Power Demand Fluctuation Scenario Creation Unit | 33 Proposed Charge/ Discharge Plan Evaluation Unit |

| Input Unit 22 | Display Unit 23 | Communication Unit 24 |
|---|---|---|

3

| In-Vehicle Terminal 4 | Base Plan Management Terminal 5 | Charge/Discharge Control Terminal 6 |
|---|---|---|
| Communication Unit 46 | Communication Unit 48 | Communication Unit 50 |
| Display Unit 47 | Display Unit 49 | Display Unit 51 |

# FIG. 3

35

## Vehicle Information Table

| Vehicle Name | Type | Electricity Consumption [km/kWh] | Battery Capacity [kWh] | Charge Amount Lower Limit [kWh] | Remaining Battery Capacity [kWh] | ... |
|---|---|---|---|---|---|---|
| Vehicle 1 | Plug-in Charging Type | 4.0 | 20.0 | 2.0 | 8.0 | ... |
| Vehicle 2 | Plug-in Charging Type | 4.0 | 20.0 | 2.0 | 4.0 | ... |
| ... | | ... | ... | ... | ... | ... |

# FIG. 4

34

## Operation Information Table

| Vehicle Name | Course Name | Departure Date and Time | Arrival Date and Time | Travel Distance [km] | Power Consumption [kWh] | ... |
|---|---|---|---|---|---|---|
| Vehicle 1 | Delivery Course 1 | 4/1 8:00 | 4/1 12:00 | 15 | 8 | ... |
| Vehicle 1 | Delivery Course 2 | 4/1 13:00 | 4/1 17:00 | 20 | 10 | ... |
| Vehicle 2 | Delivery Course 3 | 4/1 6:10 | 4/1 15:00 | 30 | 18 | ... |
| ... | | ... | ... | ... | | ... |

# FIG. 5

36

## Base Information Table

| Latitude | Longitude | Contract Power [kW] | The Number of Installed Chargers [pieces] | The Number of Installed Storage Batteries [pieces] | Business Hours | | ... |
|---|---|---|---|---|---|---|---|
| | | | | | Start | End | |
| 33° 36′23″ | 130° 25′05″ | 200.0 | 4 | 2 | 7:00 | 19:00 | ... |

# FIG. 6

37

## Charger Information Table

| Charger Number | Charge Amount [kW] | Acceptance Time | | Charge Mode | Electricity Rate [¥/min] | ... |
|---|---|---|---|---|---|---|
| | | Start | End | | | ... |
| 1 | 3.2 | 07:00 | 19:00 | Normal Charging | 5 | ... |
| 2 | 3.2 | 07:00 | 19:00 | Normal Charging | 5 | ... |
| ... | ... | ... | ... | ... | ... | ... |

# FIG. 7

38

## Storage Battery Information Table

| Storage Battery Number | Capacity [kWh] | Electricity Storage Speed [kWh/h] | Electricity Storage Loss Rate [%] | Discharge Speed [kWh/h] | Discharge Loss Rate [%] | ... |
|---|---|---|---|---|---|---|
| 1 | 100 | 7 | 5 | 6 | 3 | ... |
| 2 | 80 | 7 | 5 | 6 | 3 | ... |
| ... | ... | ... | ... | ... | ... | ... |

# FIG. 8

39

## Grid Power Demand Prediction Information Table

| Time Slot | Predicted Grid Power Demand [kWh] | Electric Power Cost [¥/kWh] | Error [%] |
|---|---|---|---|
| 2022/4/1 0:00-0:30 | 20 | 1 | 10 |
| 2022/4/1 0:30-1:00 | 30 | 2 | 2 |
| ... | ... | ... | ... |

# FIG. 9

Weather Forecast Information Table

EP 4 711 195 A1

40

| Time Slot | Solar Radiation Amount [MJ/$m^2$] | Wind Power [m/s] | Estimated Value of Renewable Energy Power Generation Amount [kW] | Rainy Weather Probability [%] | Sunny Weather Probability [%] | Cloudy Weather Probability [%] | Error [%] |
|---|---|---|---|---|---|---|---|
| 2022/4/1 0:00-0:30 | 0.00 | 1.3 | 0.05 | 30 | 50 | 20 | 10 |
| 2022/4/1 0:30-1:00 | 0.00 | 0.2 | 0.01 | 25 | 50 | 25 | 2 |
| ... | ... | ... | 5 | ... | ... | ... | ... |

# FIG. 10

41

## Evaluation Information Table

| Evaluation Item | Evaluation Weight |
|---|---|
| Battery Depletion Rate | -5 |
| Grid Power Stability Rate | 1 |
| Renewable Energy Utilization Rate | 2 |

# FIG. 11

42

## Parameter Information Table

| Parameter Number | Parameter Item | Set of Values |
|---|---|---|
| 1 | Lower Limit of Storage Battery Utilization Rate | {0、 10%、 20%、 30%、 40%、 50%、 ...} |
| 2 | Maximum Number of Divisions of EV Charging | {1、 2、 3、 ...} |
| ... | ... | ... |

# FIG. 12A

Proposed Charge/Discharge Plan Information Table 43

| Plan Number | Parameter 1: Lower Limit of Storage Battery Utilization Rate | Parameter 2: Maximum Number of Divisions of EV Charging | EV Charge/ Discharge Plan | Electricity Storage/ Discharge Plan for Storage Battery |
|---|---|---|---|---|
| Plan 1 | 10% | 1 | EV Charge/ Discharge Plan 1 | Electricity Storage/ Discharge Plan 1 for Storage Battery |
| Plan 2 | 10% | 2 | ... | ... |
| ... | ... | ... | ... | ... |

# FIG. 12B

Electric Vehicle Charge/Discharge Plan 1

| Vehicle Number | Charge Number | Originating Source of Charging Power | Charge Amount [kWh] | Times | | ... |
|---|---|---|---|---|---|---|
| | | | | Start | End | |
| Vehicle 1 | 1 | Grid | 12.0 | 4/1 10:00 | 4/1 12:00 | ... |
| ... | ... | ... | ... | ... | ... | ... |

# FIG. 12C

Storage/Discharge Plan 1 for Storage Battery

| Storage Battery Number | Electricity Storage/ Discharge | Electricity Storage Source | Discharge Destination | Charge /Discharge Amount [kWh] | Remaining Power Amount [kWh] | Times | | ... |
|---|---|---|---|---|---|---|---|---|
| | | | | | | Start | End | |
| Storage Battery 1 | Electricity Storage | Renewable Energy Power Generation | - | 12.0 | 12.0 | 4/1 9:00 | 4/1 12:00 | ... |
| | | ... | ... | ... | ... | ... | ... | ... |

# FIG. 13

44

**Renewable Energy Power Generation Amount Fluctuation Scenario Information Table**

| Scenario Number | Renewable Energy Power Generation Amount For Each Time Slot | | |
| --- | --- | --- | --- |
| | Start Time of Day | End Time of Day | Renewable Energy Power Generation Amount [kW] |
| 1 | 2022/4/1  0:00 | 2022/4/1 0:30 | 0.05 |
| | 2022/4/1 0:30 | 2022/4/1 1:00 | 0.03 |
| | ... | ... | ... |
| | 2022/4/1 23:30 | 2022/4/2 0:00 | 0.00 |
| 2 | 2022/4/1  0:00 | 2022/4/1 0:30 | 0.06 |
| | 2022/4/1 0:30 | 2022/4/1 1:00 | 0.02 |
| | ... | ... | ... |
| | 2022/4/1 23:30 | 2022/4/2 0:00 | 0.01 |
| ... | ... | ... | ... |

# FIG. 14

45

## Grid Power Demand Fluctuation Scenario Information Table

| Scenario Number | Grid Power Demand Amount For Each Time Slot | | |
|---|---|---|---|
| | Start Time of Day | End Time of Day | Grid Power Demand Amount [kW] |
| 1 | 2022/4/1  0:00 | 2022/4/1 0:30 | 5 |
| | 2022/4/1 0:30 | 2022/4/1 1:00 | 15 |
| | … | … | … |
| | 2022/4/1 23:30 | 2022/4/2 0:00 | 5 |
| 2 | 2022/4/1  0:00 | 2022/4/1 0:30 | 7 |
| | 2022/4/1 0:30 | 2022/4/1 1:00 | 20 |
| | … | … | … |
| | 2022/4/1 23:30 | 2022/4/2 0:00 | 3 |
| … | … | … | … |

# FIG. 15

Vehicle Charge/
Discharge Plan and Storage Battery Charge/
Discharge Plan Creation Processing

Read input data — S100

Create a plurality of proposed charge/
discharge plans and proposed electricity storage/
discharge plans — S200

Create renewable energy power generation amount
fluctuation scenario — S300

Create grid power demand fluctuation scenario — S400

Repeat executing processing on a combination of
renewable energy power generation amount scenario and
grid power demand situation scenario

Evaluate grid power stability rate and renewable energy
utilization rate of each candidate solution — S500

Calculate average of evaluation values of all the scenarios
regarding each candidate solution — S600

Output candidate solution with the largest average value — S700

END

# FIG. 16

Proposed Charge/Discharge Plan Creation Processing

Read data and retain Set 1 as a set of values for Parameter 1 and Set 2 as a set of values for Parameter 2 — S210

Repeat executing processing until Set 1 becomes empty set

Repeat executing processing until Set 2 becomes empty set

Construct mathematical model for charge/discharge plan: when first element of Set 1 is n and first element of Set 2 is m, set "lower limit of storage battery utilization rate is n" and "the maximum number of divisions of EV charging is m" as constraint conditions and set minimization of the number of battery depletion occurrences during delivery of EV as objective function, and use mathematical optimization method to create charge/discharge and electricity storage/discharge plan to use electric power of grid power, renewable energy power generation, and storage battery depending on situation — S220

Any feasible proposed plan exists? — S230

NO

YES

Add the proposed plan to proposed charge/ discharge plan information table — S240

Delete first element from Set 2 — S250

Set Set 2 as a set of values for Parameter 2 — S260

Delete first element of Set 1 — S270

END

# FIG. 17

```
┌─────────────────────────────────────────┐
│  Renewable Energy Power Generation Amount │
│  Changing Scenario Creation Processing    │
└─────────────────────────────────────────┘
                    │
                    ▼
┌─────────────────────────────────────────┐  S310
│            Read data                      │
└─────────────────────────────────────────┘
                    │
                    ▼
┌─────────────────────────────────────────┐
│  Calculate sum total of solar power       │  S320
│  generation amount and wind power         │
│  generation amount in each case of rainy, │
│  sunny, and cloudy weather during         │
│  each time slot                           │
└─────────────────────────────────────────┘
                    │
                    ▼
┌─────────────────────────────────────────┐  S330
│  Calculate Expected Value of Power        │
│  Generation Amount                        │
└─────────────────────────────────────────┘
```

Calculate Expected Value of Power Generation Amount = $\Sigma_{Weather}$ (Probability × Total Power Generation Amount) regarding each time slot — **S330**

Until the set number of scenarios is achieved

Generate random number for each time slot according to normal distribution so that average value becomes expected value of power generation amount, and set the obtained random number as predicted power generation amount for the relevant time slot — **S340**

Add time-series data to renewable energy power generation amount fluctuation scenario information table — **S350**

END

# FIG. 18

```
Grid Power Demand Fluctuation
Scenario Creation Processing
```

Read data ⎤ S410

Until the set number of scenarios is achieved

Generate random number for each time slot according to normal distribution so that average value becomes predicted grid power demand amount, and set the obtained random number as grid power demand amount for the relevant time slot ⎤ S420

Add time-series data to renewable energy power generation amount fluctuation scenario information table ⎤ S430

END

# FIG. 19

1000

1100

| Candidate Solution | Scenario Number | Battery Depletion Rate [%] | Grid Power Stability Rate [%] | Renewable Energy Utilization Rate [%] | Evaluation Value |
|---|---|---|---|---|---|
| Plan 1 | 1 | 98 | 75 | 85 | 223 |
| | 2 | 74 | 85 | 80 | 239 |
| | ... | ... | ... | ... | ... |
| Average Evaluation Value for All Scenarios for Plan 1 | ... | ... | ... | ... | ... |
| Plan 2 | 1 | 86 | 43 | 62 | 129 |
| | 2 | 99 | 68 | 78 | 231 |
| | ... | ... | ... | ... | ... |
| Average Evaluation Value for All Scenarios for Plan 2 | ... | ... | ... | ... | ... |
| ... | ... | ... | ... | ... | ... |

# FIG. 20

2000

Schedule of Vehicle 1

2100

| Dates and Times | | Course Name | Power Consumption [kWh] | Charging Electric Power [kWh] | ... |
|---|---|---|---|---|---|
| Start | End | | | | |
| 4/1 8:00 | 4/1 10:00 | Delivery Course 1 | 18 | - | ... |
| 4/1 10:00 | 4/1 12:30 | Charging | - | 18 | ... |
| 4/1 12:30 | 4/1 15:00 | Delivery Course 2 | 6 | - | ... |
| | | | | | ... |

2200

Travel Route of Vehicle 1

Charging :
10:00-12:30

Delivery Course 1 :
8:00-10:00

Delivery Course 2 :
12:30-15:00

# FIG. 21

3000

## Output Display Example of Base Plan Management Terminal

Vehicle Charge/Discharge Plan

3100

| Vehicle Name | 8:00　　　11:00　　　14:00　　　17:00　　　20:00 |
|---|---|
| Vehicle 1 | Delivery Course1 ▮▮▯ Delivery Course2 ░░░ |
| Vehicle 2 | Delivery Course3 ▒▒ Delivery Course4 ▮▮▮ ░░░ |
| ... | ... |

Originating Source of Charging Power　■ Charging directly from grid power　▒ Charging from grid power via storage battery

Discharge Destination of Discharging Power　▒ Charging directly from renewable energy　☐ Charging from renewable energy via storage battery

▥ Discharging to grid power　▥ Discharging to vehicle

Delivery　☐ Delivery course in charge

▼|Vehicle 1　3200A

3200

| Charger Number | Charge/ Discharge | Originating Source of Charging Power | Discharge Destination | Charge/ Discharge Amount [kWh] | Dates and Times | | |
|---|---|---|---|---|---|---|---|
| | | | | | Start | End | ... |
| 1 | Charging | Grid | - | 12.0 | 4/1 10:00 | 4/1 12:00 | ... |
| 1 | Charging | Renewable Energy - Storage Battery 1 | - | 6.0 | 4/1 12:00 | 4/1 12:30 | ... |
| ... | | | | ... | ... | ... | ... |

# FIG. 22

4000

4100

Electricity Storage/Discharge Plan for Storage Battery

| Storage Battery Number | Electricity Storage/ Discharge | Electricity Storage Source | Discharge Destination | Charge/ Discharge Amount [kWh] | Remaining Power Amount [kWh] | Dates and Times | | ... |
|---|---|---|---|---|---|---|---|---|
| | | | | | | Start | End | |
| Storage Battery 1 | Electricity Storage | Renewable Energy Power Generation | - | 12.0 | 12.0 | 4/1 9:00 | 4/1 12:00 | ... |
| Storage Battery 1 | Discharge | - | Vehicle 1 | 6.0 | 6.0 | 4/1 12:00 | 4/1 14:00 | ... |
| | | ... | ... | ... | ... | ... | ... | ... |

4200

▼Storage Battery 1 —— 4200A

Daily Usage Status Regarding Storage Battery 1

4200B

Electricity Storage

0

Discharge

Time of Day

■ Store electricity from grid power to storage battery

▨ Store electricity from renewable energy power generation to storage battery

-○- Storage Battery Remaining Power Amount

☐ Discharging from storage battery to building

▨ Discharging from storage battery to EV

# FIG. 23

1A

2A

## Charge/Discharge Planning Apparatus

### Storage Unit 21

| | |
|---|---|
| **34A** Operation Information Table | **40** Weather Forecast Information Table |
| **35A** Vehicle Information Table | **41** Evaluation Information Table |
| **36** Base Information Table | **42** Parameter Information Table |
| **37** Charger Information Table | **43** Proposed Charge/ Discharge Plan Information Table |
| **38** Storage Battery Information Table | **44** Renewable Energy Power Generation Amount Fluctuation Scenario Information Table |
| **39** Grid Power Demand Prediction Information Table | |
| **52** Replaceable Battery Information Table | **45** Grid Power Demand Fluctuation Scenario Information Table |

### Control Unit 20

| | |
|---|---|
| **30** Renewable Energy Power Generation Amount Fluctuation Scenario Creation Unit | **32** Proposed Charge/ Discharge Plan Creation Unit |
| **31** Grid Power Demand Fluctuation Scenario Creation Unit | **33** Proposed Charge/ Discharge Plan Evaluation Unit |

| Input Unit 22 | Display Unit 23 | Communication Unit 24 |
|---|---|---|

3

| In-Vehicle Terminal 4 | Base Plan Management Terminal 5 | Charge/Discharge Control Terminal 6 |
|---|---|---|
| Communication Unit 46 | Communication Unit 48 | Communication Unit 50 |
| Display Unit 47 | Display Unit 49 | Display Unit 51 |

## FIG. 24

35A

### Vehicle Information Table

| Vehicle Name | Type | Built-in Battery | Electricity Consumption [km/kWh] | Battery Capacity [kWh] | Charge Amount Lower Limit [kWh] | Remaining Battery Capacity [kWh] | ... |
|---|---|---|---|---|---|---|---|
| Vehicle 1 | Plug-in Charging Type | Battery 1 | 4.0 | 20.0 | 2.0 | 8.0 | ... |
| Vehicle 2 | Battery Replacement Type | Battery 3 | 4.0 | 20.0 | 2.0 | 4.0 | ... |
| ... | ... | ... | ... | ... | ... | ... | ... |

## FIG. 25

34A

### Operation Information Table

| Vehicle Name | Task Name | Battery | Start Date and Time | End Date and Time | Travel Distance [km] | Power Consumption [kWh] | ... |
|---|---|---|---|---|---|---|---|
| Vehicle 1 | Delivery Course 1 | Battery 1 | 4/1 8:00 | 4/1 12:00 | 15 | 8 | ... |
| Vehicle 1 | Battery Replacement | Battery 1-Battery 2 | 4/1 12:05 | 4/1 12:05 | - | - | ... |
| Vehicle 1 | Delivery Course 2 | Battery 2 | 4/1 13:00 | 4/1 17:00 | 20 | 10 | ... |
| ... | ... | ... | ... | ... | ... | ... | ... |

FIG. 26

52

Replaceable Battery Information Table

| Battery Name | Task Name | Original Place | Battery Capacity [kWh] | Charge Amount Lower Limit [kWh] | Remaining Battery Capacity [kWh] | ... |
|---|---|---|---|---|---|---|
| Battery 1 | Install | Vehicle 1 | 20.0 | 2.0 | 8.0 | ... |
| Battery 2 | Retain | Base | 20.0 | 2.0 | 20.0 | ... |
| ... | | ... | ... | ... | ... | ... |

# FIG. 27

5000

## Output Display Example of Base Plan Management Terminal

5100

Battery Charge Plan

| Battery Name | 8:00 | 11:00 | 14:00 | 17:00 | 20:00 |
|---|---|---|---|---|---|
| Battery 1 | | ■ | Vehicle 3 ▓ | □ | |
| Battery 2 | Vehicle 2 | ▓ | ▒ | ■ | |
| ... | | | ... | | |

Originating Source of Charging Power — ■ Charging from grid — ▓ Charging from grid via storage battery

Discharge Destination of Discharging Power — ▒ Charging directly from renewable energy — □ Charging from renewable energy via storage battery — ▓ Discharging to grid power — ▓ Discharging to vehicle

Vehicle Installment — □ Installed in vehicle

5200

▼Battery 1 ── 5200A

5200B

| Battery Number | Charge/ Discharge | Originating Source of Charging Power | Discharge Destination | Charge/ Discharge Amount [kWh] | Dates and Times | | |
|---|---|---|---|---|---|---|---|
| | | | | | Start | End | ... |
| 1 | Charge | Grid | - | 12.0 | 4/1 10:00 | 4/1 12:00 | ... |
| 1 | Discharge | - | Vehicle 4 | 6.0 | 4/1 12:00 | 4/1 12:30 | ... |
| ... | ... | ... | ... | ... | ... | ... | ... |

Europäisches
Patentamt

European
Patent Office

Office européen
des brevets

# EUROPEAN SEARCH REPORT

**Application Number**

EP 25 19 0848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/196234 A1 (BHIMANI MOHAK [US] ET AL) 22 June 2023 (2023-06-22) * paragraphs [0048], [0056], [0073], [0081], [0086], [0087], [0104] – [0107], [0129]; figure 5 * | 1-10 | INV. B60L53/53 B60L53/63 |
| | ----- | | |
| A | WO 2023/250213 A1 (GEORGIA TECH RES INST [US]) 28 December 2023 (2023-12-28) * paragraphs [0244] – [0314] * | 1-10 | |
| | ----- | | |

TECHNICAL FIELDS
SEARCHED (IPC)

B60L

The present search report has been drawn up for all claims

| Place of search | Date of completion of the search | Examiner |
|---|---|---|
| The Hague | 9 December 2025 | Bellatalla, Filippo |

EPO FORM 1503 03.82 (P04C01)

## ANNEX TO THE EUROPEAN SEARCH REPORT
## ON EUROPEAN PATENT APPLICATION NO.

EP 25 19 0848

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | Publication date | Patent family member(s) | Publication date |
|---|---|---|---|
| US 2023196234 A1 | 22-06-2023 | NONE | |
| WO 2023250213 A1 | 28-12-2023 | NONE | |

EPO FORM P0459

For more details about this annex : see Official Journal of the European Patent Office, No. 12/82

**EP 4 711 195 A1**

REFERENCES CITED IN THE DESCRIPTION

**Patent documents cited in the description**

- JP 2024052031 A

- JP 2023100472 A